# EUROPEAN PATENT APPLICATION

(11) **EP 4 557 066 A1**
(43) Date of publication of application: **21.05.2025**
(21) Application number: 23893288.3
(22) Date of filing: 17.08.2023
(51) Int. Cl.: G06F 3/048

(54) **APPLICATION INTERFACE DISPLAY METHOD, ELECTRONIC DEVICE, AND STORAGE MEDIUM**

(30) Priority: 21.11.2022 CN 202211462499
(71) Applicant: Honor Device Co., Ltd., Shenzhen, Guangdong 518040 (CN)
(72) Inventor: SUN, Yitian, Shenzhen, Guangdong 518040 (CN)
(74) Representative: Isarpatent
(86) International application number: PCT/CN2023/113524
(87) International publication number: WO 2024/109190

(57) **Abstract**

This application discloses an application interface display method, applied to an electronic device. The method includes: displaying a first interface; receiving a first operation; and displaying a second interface in response to the first operation, where the second interface includes a first split-screen window and a second split-screen window that are displayed in a split-screen manner. The first split-screen window displays a first application interface corresponding to a first application, the first application interface is displayed in the first split-screen window in a size that does not fully cover the first split-screen window, and an interface layout direction of the first application interface is different from a current screen direction of the electronic device. In this way, the first application interface of the first application can be normally displayed in the first split-screen window, thereby avoiding a problem that the first application interface is deformed due to stretching and is unbalanced in proportion, or the like. In other words, a normal first application interface that meets a use requirement of a user can be displayed in the first split-screen window, thereby improving user experience. This application further discloses an electronic device and a storage medium.

## Description

This application claims priority to Chinese Patent Application No. 202211462499.9, filed with the China National Intellectual Property Administration on November 21, 2022 and entitled "APPLICATION INTERFACE DISPLAY METHOD, ELECTRONIC DEVICE, AND STORAGE MEDIUM", which is incorporated herein by reference in its entirety.

### TECHNICAL FIELD

This application relates to the field of screen splitting technologies, and in particular, to an application interface display method, an electronic device, and a storage medium.

### BACKGROUND

With development of electronic technologies and an increase in a quantity of applications installed in electronic devices, currently, more electronic devices, such as a mobile phone and a tablet computer, can support a screen splitting function, and the electronic device can display, on a screen, application interfaces of a plurality of applications in a split-screen manner.

However, in a process of actually using the screen splitting function of the electronic device, it is found that not all applications can be well adapted to or compatible with the screen splitting technology. For example, in split-screen scenarios of left-right split-screen and up-down split-screen, there is usually a problem that an application can support left-right split-screen, but cannot support up-down split-screen. Therefore, the electronic device can normally display an application interface of the application in a case of left-right split-screen, but cannot normally display the application interface of the application in a case of up-down split-screen.

Therefore, in the conventional technology, there is a problem that an electronic device cannot well display an application interface of an application in a scenario of using a screen splitting function, affecting user experience.

### SUMMARY

This application provides an application interface display method, an electronic device, and a storage medium, to resolve a problem in the conventional technology that an electronic device cannot well display an application interface of an application in a scenario of using a screen splitting function, affecting user experience. In other words, the electronic device can well display the application interface of the application in the scenario of using the screen splitting function, thereby improving user experience.

To resolve the foregoing technical problem, according to a first aspect, an implementation of this application provides an application interface display method, applied to an electronic device. The method includes: displaying a first interface; receiving a first operation; and displaying a second interface in response to the first operation, where the second interface includes a first split-screen window and a second split-screen window that are displayed in a split-screen manner. The first split-screen window displays a first application interface corresponding to a first application, the first application interface is displayed in the first split-screen window in a size that does not fully cover the first split-screen window, and an interface layout direction of the first application interface is different from a current screen direction of the electronic device.

In this implementation, the first application interface is displayed in the first split-screen window in the size that does not fully cover the first split-screen window, and the interface layout direction of the first application interface is different from the current screen direction of the electronic device, that is, the electronic device displays the first application interface in the first split-screen window in the size that does not fully cover the first split-screen window and in the interface layout direction (that is, in an interface layout direction supported by the first application) different from the current screen direction of the electronic device. In this way, the electronic device can normally display the first application interface of the first application in the first split-screen window, thereby avoiding a problem that because the first application interface cannot be well adapted to a split-screen direction of the first split-screen window (that is, the current screen direction of the electronic device), if the first application interface is displayed in the first split-screen window in a size that fully covers the first split-screen window and in an interface layout direction the same as the current screen direction of the electronic device, the first application interface is deformed due to stretching and is unbalanced in proportion, or the like, affecting normal use by a user. In other words, the electronic device can display, in the first split-screen window, the first application interface that meets a use requirement of the user, thereby effectively improving user experience.

In a possible implementation of the first aspect, the second split-screen window displays a second application interface corresponding to a second application, the second application interface is displayed in the second split-screen window in a size that fully covers the second split-screen window, and an interface layout direction of the second application interface is the same as the current screen direction of the electronic device.

In this implementation, the second application interface is displayed in the second split-screen window in the size that fully covers the second split-screen window, and the interface layout direction of the second application interface is the same as the current screen direction of the electronic device, that is, the electronic device displays the second application interface in the second split-screen window in the size that fully covers the second split-screen window and in the interface layout direction the same as the current screen direction of the electronic device. In this way, the electronic device can normally display, in the second split-screen window, the second application interface of the second application that meets a use requirement of a user, thereby improving user experience.

In a possible implementation of the foregoing first aspect, the second split-screen window displays a second application interface corresponding to a second application, the second application interface is displayed in the second split-screen window in a size that does not fully cover the second split-screen window, and an interface layout direction of the second application interface is different from the current screen direction of the electronic device.

In this implementation, the second application interface is displayed in the second split-screen window in the size that does not fully cover the second split-screen window, and the interface layout direction of the second application interface is different from the current screen direction of the electronic device, that is, the electronic device displays the second application interface in the second split-screen window in the size that does not fully cover the second split-screen window and in the interface layout direction (that is, in an interface layout direction supported by the second application) different from the current screen direction of the electronic device. In this way, the electronic device can normally display the second application interface of the second application in the second split-screen window, thereby avoiding a problem that because the second application interface cannot be well adapted to a split-screen direction (that is, the current screen direction of the electronic device) of the second split-screen window, if the second application interface is displayed in the second split-screen window in a size that fully covers the second split-screen window and in an interface layout direction the same as the current screen direction of the electronic device, the second application interface is deformed due to stretching and is unbalanced in proportion, or the like, affecting normal use by a user. In other words, the electronic device can display, in the second split-screen window, the second application interface that meets a use requirement of the user, thereby effectively improving user experience.

In a possible implementation of the foregoing first aspect, the first interface may be a full-screen application display interface corresponding to the first application, may be a full-screen application display interface corresponding to the second application, or may be a display interface that includes a floating window. The first operation may be, for example, a screen splitting operation.

In a possible implementation of the foregoing first aspect, the second interface may further include another split-screen window different from the first split-screen window and the second split-screen window, to implement multi-window split-screen, and/or the second interface may include a floating window other than the first split-screen window and the second split-screen window, to implement simultaneous display of the floating window and the split-screen window.

In a possible implementation of the foregoing first aspect, the size that does not fully cover the first split-screen window is a first preset size, and the first preset size is any one of a first size, a second size, and a third size. The first size is a size obtained after an original interface size of the first application is adjusted based on a first preset proportion, the second size is a size that corresponds to the first size and whose aspect ratio is a first aspect ratio, and the third size is a size that corresponds to the first size and whose aspect ratio is a second aspect ratio.

In this way, the electronic device can display the first application interface in the first split-screen window in the first preset size based on the first preset size corresponding to the preset first application, which can meet a use requirement of a user for the first application interface, thereby effectively improving user experience.

The first size, the second size, the third size, the original interface size of the first application, the first preset proportion, the first aspect ratio, the second aspect ratio, and the like all may be set based on a requirement.

In a possible implementation of the foregoing first aspect, the size that does not fully cover the second split-screen window is a second preset size, and the second preset size is any one of a fourth size, a fifth size, and a sixth size. The fourth size is a size obtained after an original interface size of the second application is adjusted based on a second preset proportion, a fifth size is a size that corresponds to the fourth size and whose aspect ratio is a third aspect ratio, and the sixth size is a size that corresponds to the fourth size and whose aspect ratio is a fourth aspect ratio.

In this way, the electronic device can display the second application interface in the second split-screen window in the second preset size based on the second preset size corresponding to the preset second application, which can meet a use requirement of a user for the second application interface, thereby effectively improving user experience.

The fourth size, the fifth size, the sixth size, the original interface size of the second application, the second preset proportion, the third aspect ratio, the fourth aspect ratio, and the like all may be set based on a requirement.

In addition, the first size, the second size, the third size, the fourth size, the fifth size, and the sixth size may have same sizes, or may be completely different. The original interface size of the first application and the original interface size of the second application may be the same or different. The first preset proportion and the second preset proportion may be the same or different. The first aspect ratio, the second aspect ratio, the third aspect ratio, and the fourth aspect ratio may have same ratios, or may be completely different. The size, the preset proportion, the aspect ratio, and the like may be selected or set based on an application, a use requirement of a user, and the like.

In a possible implementation of the foregoing first aspect, a function bar is not displayed in the first split-screen window that displays an application interface in a non-fully covered manner, and a function bar is displayed in the second split-screen window that displays an application interface in a fully covered manner.

The function bar may be displayed in the second split-screen window that displays an application interface displayed in a size that fully covers a split-screen window. In this way, a user can perform a further operation on the second split-screen window. The function bar may not be displayed in the first split-screen window that displays an application interface displayed in a size that does not fully cover a split-screen window. In this way, a requirement of a user for better use of the first application interface in the first split-screen window can be met, thereby improving user experience.

In a possible implementation of the foregoing first aspect, the displaying a second interface in response to the first operation includes: determining, in response to the first operation, a display manner of an application interface of an application to-be in split-screen in a corresponding split-screen window based on a screen direction of the electronic device and an interface layout direction and an interface size adjustment capability that are supported by the application to-be in split-screen; and displaying the second interface in the determined display manner.

In this way, the electronic device can conveniently and accurately determine, based on the current screen direction of the electronic device and the interface layout direction and the interface size adjustment capability that are supported by the application to-be in split-screen, whether the application to-be in split-screen can be well adapted to a current split-screen window, to conveniently and accurately determine a specific display manner of displaying a corresponding application interface in a corresponding split-screen window, so as to display an application interface that meets a use requirement of a user, thereby effectively improving user experience.

In a possible implementation of the foregoing first aspect, the determining a display manner of an application interface of an application to-be in split-screen in a corresponding split-screen window based on a screen direction of the electronic device and an interface layout direction and an interface size adjustment capability that are supported by the application to-be in split-screen includes: If the application to-be in split-screen supports an interface layout direction the same as the current screen direction of the electronic device, or if the interface size adjustment capability of the application to-be in split-screen is that a size is adjustable, it indicates that the application to-be in split-screen can be well adapted to the current split-screen window, and the application interface of the application to-be in split-screen is displayed in the corresponding split-screen window in a size that fully covers a split-screen window and in the interface layout direction the same as the current screen direction of the electronic device. Alternatively, if the application to-be in split-screen does not support the interface layout direction the same as the current screen direction of the electronic device, and the interface size adjustment capability of the application to-be in split-screen is that the size is unadjustable, it indicates that the application to-be in split-screen cannot be well adapted to the current split-screen window, and the application interface of the application to-be in split-screen is displayed in the corresponding split-screen window in a size that does not fully cover a split-screen window and in an interface layout direction different from the current screen direction of the electronic device.

In this way, the electronic device can conveniently and accurately determine, based on the current screen direction of the electronic device and the interface layout direction and the interface size adjustment capability that are supported by the application to-be in split-screen, whether the application to-be in split-screen can be well adapted to a current split-screen window, to conveniently and accurately determine a specific display manner of displaying a corresponding application interface in a corresponding split-screen window, so as to display an application interface that meets a use requirement of a user, thereby effectively improving user experience.

In a possible implementation of the foregoing first aspect, the displaying a second interface in response to the first operation includes: determining, in response to the first operation, a display manner of an application interface of an application to-be in split-screen in a corresponding split-screen window based on a screen direction of the electronic device, an interface layout direction supported by the application to-be in split-screen, an interface size adjustment capability of the application to-be in split-screen, and whether the application to-be in split-screen is a preset application; and displaying the second interface in the determined display manner.

In this way, the electronic device can conveniently and accurately determine, based on the screen direction of the electronic device, the interface layout direction supported by the application to-be in split-screen, the interface size adjustment capability of the application to-be in split-screen, and whether the application to-be in split-screen is the preset application, whether the application to-be in split-screen can be well adapted to the current split-screen window, to conveniently and accurately determine a specific display manner of displaying the corresponding application interface in the corresponding split-screen window, so as to display an application interface that meets a use requirement of a user, thereby effectively improving user experience.

In a possible implementation of the foregoing first aspect, the preset application is an application in a preset whitelist.

Applications in the whitelist may be, for example, some applications that can be normally displayed in a split-screen window in a size that does not fully cover the split-screen window and in interface layout directions supported by the applications, and that can meet a use requirement of a user.

In this way, the electronic device can further determine whether a use requirement of a user can be met when the application to-be in split-screen is displayed in a split-screen window in a size that does not fully cover a split-screen window and in an interface layout direction supported by the application to-be in split-screen, and if the use requirement of the user can be met, the electronic device further determines whether the application to-be in split-screen needs to be displayed in the split-screen window in the size that does not fully cover a split-screen window and in the interface layout direction supported by the application to-be in split-screen. In this way, a specific display manner of displaying a corresponding application interface in a corresponding split-screen window can be conveniently and accurately determined, to display an application interface that meets a use requirement of a user, thereby effectively improving user experience.

In a possible implementation of the foregoing first aspect, the determining a display manner of an application interface of an application to-be in split-screen in a corresponding split-screen window based on a screen direction of the electronic device, an interface layout direction supported by the application to-be in split-screen, an interface size adjustment capability of the application to-be in split-screen, and whether the application to-be in split-screen is a preset application includes: If the application to-be in split-screen supports an interface layout direction the same as the current screen direction of the electronic device, or if the application to-be in split-screen is the preset application and the interface size adjustment capability of the application to-be in split-screen is that a size is adjustable, it indicates that the application to-be in split-screen can be well adapted to the current split-screen window, and the application interface of the application to-be in split-screen is displayed in the corresponding split-screen window in a size that fully covers a split-screen window and in the interface layout direction the same as the current screen direction of the electronic device. Alternatively, if the application to-be in split-screen does not support the interface layout direction the same as the current screen direction of the electronic device, the application to-be in split-screen is the preset application, and the interface size adjustment capability of the application to-be in split-screen is that the size is unadjustable, it indicates that the application to-be in split-screen cannot be well adapted to the current split-screen window, and the application interface of the application to-be in split-screen is displayed in the corresponding split-screen window in a size that does not fully cover a split-screen window and in an interface layout direction different from the current screen direction of the electronic device.

In this way, the electronic device can conveniently and accurately determine, based on the screen direction of the electronic device, the interface layout direction supported by the application to-be in split-screen, the interface size adjustment capability of the application to-be in split-screen, and whether the application to-be in split-screen is the preset application, whether the application to-be in split-screen can be well adapted to the current split-screen window, to conveniently and accurately determine a specific display manner of displaying the corresponding application interface in the corresponding split-screen window, so as to display an application interface that meets a use requirement of a user, thereby effectively improving user experience.

In a possible implementation of the foregoing first aspect, the method further includes: If the application to-be in split-screen does not support the interface layout direction the same as the current screen direction of the electronic device, and the application to-be in split-screen is not the preset application, it indicates that a use requirement of a user cannot be met when the application to-be in split-screen is displayed in a split-screen window in a size that does not fully cover a split-screen window and in the interface layout direction supported by the application to-be in split-screen, and a screen splitting operation corresponding to the application to-be in split-screen is not performed. For example, prompt information may pop up to prompt the user that screen splitting of the application to-be in split-screen is not supported currently.

In this way, a problem that the application to-be in split-screen cannot be well adapted to a current split-screen window, and the application interface is deformed due to stretching when being displayed in a split-screen manner can be avoided, thereby effectively improving user experience.

In a possible implementation of the foregoing first aspect, the method further includes: determining, in any one of the following cases, that the application to-be in split-screen supports the interface layout direction the same as the current screen direction of the electronic device: the application to-be in split-screen supports a first interface layout direction, the current screen direction of the electronic device is a first screen direction, and the first interface layout direction is the same as the first screen direction; and the application to-be in split-screen supports a second interface layout direction, the current screen direction of the electronic device is a second screen direction, and the second interface layout direction is the same as the second screen direction.

In a possible implementation of the foregoing first aspect, the method further includes: determining, in any one of the following cases, that the application to-be in split-screen does not support the interface layout direction the same as the current screen direction of the electronic device: the application to-be in split-screen supports the first interface layout direction, the current screen direction of the electronic device is the second screen direction, and the first interface layout direction is different from the second screen direction; and the application to-be in split-screen supports the second interface layout direction, the current screen direction of the electronic device is the first screen direction, and the second interface layout direction is different from the first screen direction.

In this way, the electronic device can conveniently and accurately determine whether the application to-be in split-screen supports the interface layout direction the same as the current screen direction of the electronic device, to more accurately and conveniently determine a display manner of an application interface in a corresponding split-screen window, thereby effectively improving a display effect of the application interface, and effectively improving user experience.

In a possible implementation of the foregoing first aspect, the first interface layout direction is a portrait layout direction, the second interface layout direction is a landscape layout direction, the first screen direction is a portrait direction, and the second screen direction is a landscape direction.

In this way, the electronic device can determine, based on whether the screen direction of the electronic device is the portrait direction or the landscape direction, and whether the interface layout direction supported by the application is a vertical layout direction or a horizontal layout direction, whether the application to-be in split-screen supports the interface layout direction the same as the current screen direction of the electronic device, to more accurately and conveniently determine a display manner of an application interface in a corresponding split-screen window, thereby effectively improving a display effect of the application interface, and effectively improving user experience.

In a possible implementation of the foregoing first aspect, if the electronic device includes one display screen, the first operation is any one of the following operations: a screen splitting operation, and an operation of adjusting a direction in which the electronic device is located or adjusting a direction in which the display screen of the electronic device is located.

The first operation may be, for example, a screen splitting operation (for example, a manner of selecting a split-screen application or switching from a floating window to a split-screen) in which a user operates the first interface to perform screen splitting, or an operation in which a user rotates the display screen to adjust the direction in which the electronic device is located or adjust the direction in which the display screen of the electronic device is located.

In this way, in different split-screen scenarios, the electronic device can display a corresponding split-screen window and display a corresponding application interface in the corresponding split-screen window based on an operation of the user, to meet a use requirement of the user, thereby effectively improving user experience.

In a possible implementation of the foregoing first aspect, if the electronic device includes at least two display screens, the first operation is any one of the following operations: a screen splitting operation, an operation of adjusting a direction in which the electronic device is located or adjusting a direction in which the display screen of the electronic device is located, and an operation of adjusting use states of different display screens of the electronic device.

The first operation may be, for example, a screen splitting operation (for example, selecting a split-screen application or a manner of switching from a floating window to a split screen) in which the user performs an operation on the first interface, an operation in which the user rotates a display screen to adjust a direction in which the electronic device is located or a direction in which the display screen of the electronic device is located, or an operation in which the user folds a display screen, unfolds a display screen to switch between an inner display screen and an outer display screen, or switches between different display screens to adjust use states of different display screens of the electronic device.

In this way, in different split-screen scenarios, the electronic device can display a corresponding split-screen window and display a corresponding application interface in the corresponding split-screen window based on an operation of the user, to meet a use requirement of the user, thereby effectively improving user experience.

In a possible implementation of the foregoing first aspect, the first split-screen window and the second split-screen window may be displayed on a same screen in a split-screen manner, or may be displayed on different screens in a split-screen manner.

In a possible implementation of the foregoing first aspect, the electronic device may be a bar-type electronic device having only one screen, may be a foldable-screen electronic device having only one screen, or may be a foldable-screen electronic device having two screens (for example, one inner screen and one outer screen, or two outer screens, or two inner screens). Certainly, the electronic device may alternatively be an electronic device that includes three or more screens.

According to a second aspect, an implementation of this application provides an electronic device, including: a memory, configured to store a computer program, where the computer program includes program instructions; and a processor, configured to execute the program instructions, so that the electronic device performs the application interface display method provided in any one of the first aspect and/or the possible implementations of the first aspect.

According to a third aspect, an implementation of this application provides a computer-readable storage medium. The computer-readable storage medium stores a computer program, the computer program includes program instructions, and the program instructions are run by an electronic device to enable the electronic device to perform the application interface display method provided in any one of the first aspect and/or the possible implementations of the first aspect.

It may be understood that, for beneficial effects of the second aspect to the third aspect, refer to related descriptions in the first aspect. Details are not described herein again.

### BRIEF DESCRIPTION OF DRAWINGS

To describe technical solutions in this application more clearly, the following briefly describes accompanying drawings used for describing implementations.
FIG. 1 is a schematic diagram of an interface in which a mobile phone displays an application interface in the conventional technology according to some implementations of this application;
FIG. 2 is a schematic diagram of an interface in which a mobile phone displays an application interface according to some implementations of this application;
FIG. 3A is a schematic diagram of a correspondence between a display manner of an application interface and each of a screen direction, and an interface layout direction and an interface size adjustment capability that are supported by an application according to some implementations of this application;
FIG. 3B is a schematic diagram of another correspondence between a display manner of an application interface and each of a screen direction, and an interface layout direction and an interface size adjustment capability that are supported by an application according to some implementations of this application;
FIG. 4 is a schematic diagram of sizes of several display interfaces in a scenario in which a mobile phone displays an application interface in a size that does not fully cover a split-screen window according to some implementations of this application;
FIG. 5 is a schematic diagram of a structure of a mobile phone according to some implementations of this application;
FIG. 6 is a schematic diagram of a software system of a mobile phone according to some implementations of this application;
FIG. 7A-FIG. 7G are schematic diagrams of some display interfaces of a mobile phone 100 according to some implementations of this application;
FIG. 8 is a schematic diagram of some display interfaces of a mobile phone 200 according to some implementations of this application;
FIG. 9 is a schematic diagram of some display interfaces of a mobile phone 300 according to some implementations of this application;
FIG. 10 is a schematic diagram of some display interfaces of a tablet computer 400 according to some implementations of this application;
FIG. 11A to FIG. 11E are schematic diagrams of some other display interfaces of a mobile phone 100 according to some implementations of this application;
FIG. 12A is a schematic diagram of a display manner of a split-screen interface according to some implementations of this application;
FIG. 12B is a schematic diagram of another display manner of a split-screen interface according to some implementations of this application;
FIG. 13A is a schematic diagram of a display interface in which a mobile phone 100 invokes a text input method in a split-screen state according to some implementations of this application;
FIG. 13B is a schematic diagram of another display interface in which a mobile phone 100 invokes a text input method in a split-screen state according to some implementations of this application;
FIG. 14A to FIG. 14F are schematic diagrams of a process in which a mobile phone 100 switches between a full-screen state, a split-screen state, and a floating state according to some implementations of this application;
FIG. 15 is a schematic flowchart of an application interface display method provided in this application according to some implementations of this application;
FIG. 16 is a schematic flowchart of another application interface display method provided in this application according to some implementations of this application;
FIG. 17 is a schematic flowchart of another application interface display method provided in this application according to some implementations of this application;
FIG. 18 is a schematic flowchart of another application interface display method provided in this application according to some implementations of this application;
FIG. 19 is a schematic flowchart of another application interface display method provided in this application according to some implementations of this application;
FIG. 20 is a schematic flowchart of another application interface display method provided in this application according to some implementations of this application;
FIG. 21 is a schematic flowchart of another application interface display method provided in this application according to some implementations of this application;
FIG. 22A is a schematic diagram of a size of an application interface that is displayed in a size that does not fully cover a split-screen window according to some implementations of this application;
FIG. 22B is a schematic diagram of another size of an application interface that is displayed in a size that does not fully cover a split-screen window according to some implementations of this application;
FIG. 23 is a schematic diagram of a structure of an electronic device according to some implementations of this application; and
FIG. 24 is a schematic diagram of a structure of a system on chip (SoC) according to some implementations of this application.

### DESCRIPTION OF EMBODIMENTS

The following further describes in detail the technical solutions in this application with reference to the accompanying drawings.

A foldable-screen mobile phone is used as an example of an electronic device provided in an implementation of this application. In a process of using a screen splitting function (which may also be referred to as an application screen splitting function) of the foldable-screen mobile phone, the foldable-screen mobile phone displays, by default, an application interface of an application in a split-screen window in a size in which the application interface fully covers the split-screen window.

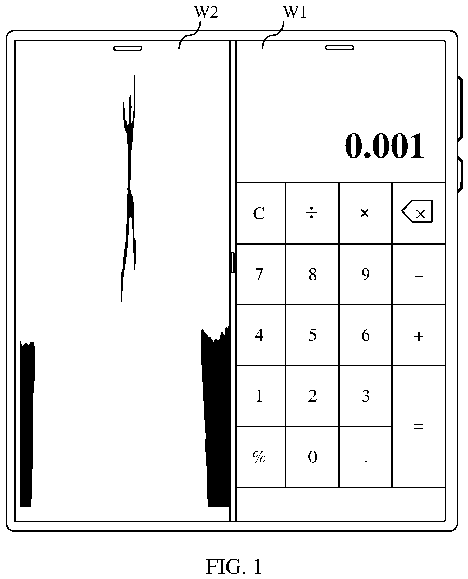

For example, referring to FIG. 1, the foldable-screen mobile phone is in a portrait state, two vertical split-screen windows (a split-screen window W1 and a split-screen window W2) are displayed on left and right split-screens (that is, vertical split-screens) of the foldable-screen mobile phone, an application interface of a calculator application is vertically displayed in the split-screen window W1 in a size that fully covers the split-screen window W1, and an application interface of a video application is vertically displayed in the split-screen window W2 in a size that fully covers the split-screen window W2.

In a process of vertically displaying the application interface of the calculator application in the split-screen window W1 in the size that fully covers the split-screen window W1, the foldable-screen mobile phone separately performs size adjustment on an original interface size of the application interface of the calculator application in a vertical direction and a horizontal direction. The application interface of the calculator application is usually a vertical layout. Therefore, even if the foldable-screen mobile phone separately performs size adjustment on the original interface size of the application interface of the calculator application in the vertical direction and the horizontal direction, when a resized application interface of the calculator application is vertically displayed in the vertical split-screen window W1 in the size that fully covers the split-screen window W1, there is no problem that an interface is seriously unbalanced in proportion or deformed, or the like. Therefore, as shown in FIG. 1, the foldable-screen mobile phone can normally display the application interface of the calculator application in the split-screen window W1 in the size that fully covers the split-screen window W1, that is, the application interface of the calculator application displayed in the split-screen window W1 is normal, and the application interface of the calculator application can be well adapted to the split-screen window W1.

When vertically displaying the application interface of the video application in the split-screen window W2 in the size that fully covers the split-screen window W2, the foldable-screen mobile phone separately performs size adjustment on an original interface size of the application interface of the video application in a vertical direction and a horizontal direction. The application interface (for example, a video play interface) of the video application is usually in a horizontal layout. Therefore, after the application interface of the video application is stretched vertically, there is a problem that an interface is seriously unbalanced in proportion or deformed, or the like. For example, the application interface of the video application displays an image of a person in jumping. Therefore, as shown in FIG. 1, the image is deformed due to stretching and is unbalanced in proportion in the vertical direction, and a user cannot clearly view display content of the image. Therefore, the foldable-screen mobile phone cannot normally display the application interface of the video application in the split-screen window W2 in the size that fully covers the split-screen window W2, that is, the application interface of the video application displayed in the split-screen window W2 is abnormal, and the application interface of the video application cannot be well adapted to the split-screen window W2. In this case, the user cannot normally view a video by using the application interface of the video application displayed in the split-screen window W2, and there is a problem that user experience is affected.

Based on this, this application provides an application interface display method, applied to a foldable-screen mobile phone (as an example of an electronic device). In a split-screen scenario, the foldable-screen mobile phone may determine a display manner of an application interface in a split-screen window based on a screen direction of the foldable-screen mobile phone and an interface layout direction and an interface size adjustment capability that are supported by an application to-be in split-screen (that is, an application that needs to be displayed in a split-screen manner), and display an application interface of the application to-be in split-screen in a corresponding split-screen window in the determined display manner, that is, display a corresponding split-screen interface.

The screen direction is a direction in which a display screen (that is, a screen) that is of the foldable-screen mobile phone and that is in a used state is located, that is, a direction in which the foldable-screen mobile phone is located. For example, if the foldable-screen mobile phone includes only one display screen, a split-screen direction is a direction in which the display screen is located during use. If the foldable-screen mobile phone includes two display screens: an inner display screen and an outer display screen, when the inner display screen is used, a split-screen direction is a direction in which the inner display screen is located, and when the outer display screen is used, a split-screen direction is a direction in which the outer display screen is located. Certainly, the foldable-screen mobile phone may alternatively include more other display screens. The screen direction of the foldable-screen mobile phone includes a portrait direction (that is, a screen direction of the foldable-screen mobile phone in a portrait state when the foldable-screen mobile phone is placed vertically) and a landscape direction (that is, a screen direction of the foldable-screen mobile phone in a landscape state when the foldable-screen mobile phone is placed horizontally). Therefore, the screen direction includes the portrait direction (as an example of a first screen direction) and a landscape direction (as an example of a second screen direction).

The interface layout direction means the following: In a forward direction in which a picture displayed in an interface is located, if a width of the interface is greater than a height, it is considered that the interface layout direction of the interface is a horizontal layout direction; or if the width of the interface is less than the height, it is considered that the interface layout direction of the interface is a vertical layout direction. Therefore, the interface layout direction includes a portrait layout direction (which may also be referred to as a vertical layout direction or a portrait layout mode, and is used as an example of a first interface layout direction) and a landscape layout direction (which may also be referred to as a horizontal layout direction or a landscape layout mode, and is used as an example of a second interface layout direction).

An interface size adjustment capability (resizable Activity) means whether a size of an application interface of an application can be adjusted in a display process, that is, an adjustment capability of a size. Therefore, the interface size adjustment capability may include that a size is adjustable and that a size is unadjustable.

The display manner of the application interface in the split-screen window includes a display size and an interface layout direction of the application interface in the split-screen window. The display size may be a size that fully covers the split-screen window, and in this case, the corresponding interface layout direction may be an interface layout direction that is supported by an application and that is the same as a current screen direction. The display size may alternatively be a size that does not fully cover the split-screen window, and in this case, the corresponding interface layout direction may be an interface layout direction supported by the application, that is, may be an interface layout direction different from the current screen direction.

Therefore, in the application interface display method provided in this application, if an application declares that the application supports both the portrait layout direction and the landscape layout direction (that is, the interface layout direction is not a fixed direction), in a split-screen state, the foldable-screen mobile phone always displays an application interface of the application in the size that fully covers a split-screen window, and an interface layout direction of the application interface displayed in the split-screen window is the same as the current screen direction, that is, the foldable-screen mobile phone always displays the application interface of the application in the size that fully covers the split-screen window and in the interface layout direction the same as the current screen direction.

If an application declares that the application supports only the portrait layout direction or the landscape layout direction (that is, the interface layout direction is in a fixed direction), in the split-screen state, the foldable-screen mobile phone further needs to distinguish or determine a display manner of an application interface in a split-screen window based on an interface size adjustment capability declared by the application.

If the interface size adjustment capability declared by the application is that a size is adjustable, in the split-screen state, the foldable-screen mobile phone always displays the application interface of the application in a corresponding split-screen window in a size that fully covers the split-screen window, and an interface layout direction of the application interface displayed in the split-screen window is the same as the current screen direction, that is, the foldable-screen mobile phone always displays the application interface of the application in the size that fully covers the split-screen window and in the interface layout direction the same as the current screen direction.

If the size adjustment capability declared by the application is that a size is unadjustable, if an interface layout direction declared by the application is the same as the current screen direction (that is, the application supports the interface layout direction the same as the current screen direction), in the split-screen state, the foldable-screen mobile phone displays the application interface of the application in a corresponding split-screen window in a size that fully covers the split-screen window, and an interface layout direction of the application interface displayed in the split-screen window is the same as the current screen direction, that is, the foldable-screen mobile phone displays the application interface of the application in the size that fully covers the split-screen window and in the interface layout direction the same as the current screen direction. If the interface layout direction declared by the application is different from the current screen direction (that is, the application does not support the interface layout direction the same as the current screen direction), the foldable-screen mobile phone displays the application interface of the application in a corresponding split-screen window in a size that does not fully cover the split-screen window, and an interface layout direction of the application interface displayed in the split-screen window is different from the current screen direction, that is, the foldable-screen mobile phone displays the application interface of the application in the size that does not fully cover the split-screen window and in the interface layout direction supported by the application.

Further, in a split-screen scenario, the application interface display method provided in this application includes: The foldable-screen mobile phone displays a first interface. If the foldable-screen mobile phone receives a screen splitting operation (as an example of a first operation, where the screen splitting operation may be, for example, an operation of selecting, by a user, an application whose screen is to be split, an operation of switching from a floating window to a split-screen, or another screen splitting operation, an operation of rotating the foldable-screen mobile phone or the like to adjust a direction in which the foldable-screen mobile phone is located (that is, an operation of rotating a screen of the foldable-screen mobile phone or the like to adjust a direction in which the screen is located), or an operation of adjusting use states of different display screens of the foldable-screen mobile phone, for example, switching between the inner display screen and the outer display screen of the foldable-display mobile phone for use, or another operation) performed by a user corresponding to the first interface, the foldable-screen mobile phone displays a second interface in response to the screen splitting operation. The second interface includes two split-screen windows that are displayed in a split-screen manner: a split-screen window W1 (as an example of a second split-screen window) and a split-screen window W2 (as an example of a first split-screen window). In addition, the application interface of the calculator application (as an example of the application to-be in split-screen) is displayed in the split-screen window W1, and the application interface of the video application (as another example of the application to-be in split-screen) is displayed in the split-screen window W2.

In this implementation, if the foldable-screen mobile phone determines that the calculator application supports an interface layout direction the same as the current screen direction of the foldable-screen mobile phone, the foldable-screen mobile phone displays the application interface of the calculator application in the split-screen window W1 in a size that fully covers the split-screen window W1, and an interface layout direction of the application interface of the calculator application displayed in the split-screen window W1 is the same as the current screen direction of the foldable-screen mobile phone, that is, the foldable-screen mobile phone displays the application interface of the calculator application in the size that fully covers the split-screen window W1 and in the interface layout direction the same as the current screen direction. If the foldable-screen mobile phone determines that the calculator application does not support the interface layout direction the same as the current screen direction of the foldable-screen mobile phone, but an interface size adjustment capability of the calculator application is that a size is adjustable, the foldable-screen mobile phone displays the application interface of the calculator application in the split-screen window W1 in the size that fully covers the split-screen window W1, and the interface layout direction of the application interface of the calculator application displayed in the split-screen window W1 is the same as the current screen direction of the foldable-screen mobile phone, that is, the foldable-screen mobile phone displays the application interface of the calculator application in the size that fully covers the split-screen window W1 and in the interface layout direction the same as the current screen direction. If the foldable-screen mobile phone determines that the calculator application does not support the interface layout direction the same as the screen direction of the foldable-screen mobile phone, and the interface size adjustment capability of the calculator application is that a size is unadjustable, the foldable-screen mobile phone displays the application interface of the calculator application in the split-screen window W1 in a size that does not fully cover the split-screen window W1, and the interface layout direction of the application interface of the calculator application displayed in the split-screen window W1 is different from the current screen direction of the foldable-screen mobile phone, that is, the foldable-screen mobile phone displays the application interface of the calculator application in the size of that does not fully cover the split-screen window W1 and in an interface layout direction supported by the calculator application.

If the interface layout direction supported by the calculator application is the portrait layout direction, and the screen direction of the foldable-screen mobile phone is the portrait direction, it is considered that the interface layout direction supported by the calculator application is the same as the screen direction of the foldable-screen mobile phone. Alternatively, if the interface layout direction supported by the calculator application is the landscape layout direction, and the screen direction of the foldable-screen mobile phone is the landscape direction, it is considered that the interface layout direction supported by the calculator application is the same as the split-screen direction of the foldable-screen mobile phone. If the interface layout direction supported by the calculator application is the portrait layout direction, and the screen direction of the foldable-screen mobile phone is the landscape direction, it is considered that the interface layout direction supported by the calculator application is different from the split-screen direction of the foldable-screen mobile phone. Alternatively, if the interface layout direction supported by the calculator application is the landscape layout direction, and the screen direction of the foldable-screen mobile phone is the portrait direction, it is considered that the interface layout direction supported by the calculator application is different from the screen direction of the foldable-screen mobile phone.

Similarly, in this implementation, if the foldable-screen mobile phone determines that the video application supports the interface layout direction the same as the current screen direction of the foldable-screen mobile phone, the foldable-screen mobile phone displays the application interface of the video application in the split-screen window W2 in a size that fully covers the split-screen window W2, and an interface layout direction of the application interface of the video application displayed in the split-screen window W2 is the same as the current screen direction of the foldable-screen mobile phone, that is, the foldable-screen mobile phone displays the application interface of the video application in the size that fully covers the split-screen window W2 and in the interface layout direction the same as the current screen direction. If the foldable-screen mobile phone determines that the video application does not support the interface layout direction the same as the current screen direction of the foldable-screen mobile phone, but an interface size adjustment capability of the video application is that a size is adjustable, the foldable-screen mobile phone displays the application interface of the video application in the split-screen window W2 in the size that fully covers the split-screen window W2, and the interface layout direction of the application interface of the video application displayed in the split-screen window W2 is the same as the current screen direction of the foldable-screen mobile phone, that is, the foldable-screen mobile phone displays the application interface of the video application in the size that fully covers the split-screen window W2 and in the interface layout direction the same as the current screen direction. If the foldable-screen mobile phone determines that the video application does not support the interface layout direction the same as the current screen direction of the foldable-screen mobile phone, and the interface size adjustment capability of the video application is that a size is unadjustable, the foldable-screen mobile phone displays the application interface of the video application in the split-screen window W2 in the size that does not fully cover the split-screen window W2, and the interface layout direction of the application interface of the video application displayed in the split-screen window W2 is different from the current screen direction of the foldable-screen mobile phone, that is, the foldable-screen mobile phone displays the application interface of the video application in the size that does not fully cover the split-screen window W2 and in the interface layout direction supported by the video application.

If the interface layout direction supported by the video application is the portrait layout direction, and the screen direction of the foldable-screen mobile phone is the portrait direction, it is considered that the interface layout direction supported by the video application is the same as the screen direction of the foldable-screen mobile phone. Alternatively, if the interface layout direction supported by the video application is the landscape layout direction, and the screen direction of the foldable-screen mobile phone is the landscape direction, it is considered that the interface layout direction supported by the video application is the same as the screen direction of the foldable-screen mobile phone. If the interface layout direction supported by the video application is the portrait layout direction, and the screen direction of the foldable-screen mobile phone is the landscape direction, it is considered that the interface layout direction supported by the video application is different from the screen direction of the foldable-screen mobile phone. Alternatively, if the interface layout direction supported by the video application is the landscape layout direction, and the screen direction of the foldable-screen mobile phone is the portrait direction, it is considered that the interface layout direction supported by the video application is different from the screen direction of the foldable-screen mobile phone.

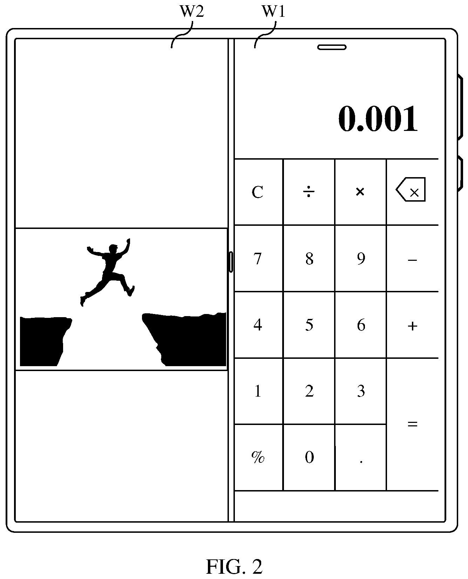

For example, in a split-screen scenario in which the foldable-screen mobile phone displays the calculator application (as an example of a second application) and the video application (as an example of a first application) in a portrait state in left and right split-screens (that is, a split-screen direction is a portrait split-screen direction, which may also be referred to as vertical split-screen), if the foldable-screen mobile phone determines that the calculator application supports the portrait layout direction, as shown in FIG. 2, the foldable-screen mobile phone vertically displays the application interface (as an example of a second application interface) of the calculator application in the split-screen window W1 in the size that fully covers the split-screen window W1. If the foldable-screen mobile phone determines that the video application does not support the portrait layout direction and supports only the landscape layout direction, and the interface size adjustment capability of the video application is that a size is unadjustable, as shown in FIG. 2, the foldable-screen mobile phone horizontally displays the application interface (as an example of a first application interface) of the video application in the split-screen window W2 in the size that does not fully cover the split-screen window W2, instead of vertically displaying the application interface of the video application in the size that fully covers the split-screen window W2, as the conventional technology shown in FIG. 1.

In this implementation, for the video application that cannot be well adapted to the vertical split-screen window W2 in a fully covered display manner (an application that is not well adapted to a split-screen), the foldable-screen mobile phone may horizontally display the application interface of the video application in the split-screen window W2 in the size that does not fully cover the split-screen window. In this way, the foldable-screen mobile phone can normally display the application interface of the video application in the split-screen window W2, thereby avoiding a problem that the application interface of the video application is deformed due to stretching and is unbalanced in proportion, or the like, affecting normal viewing by a user. In other words, a viewing requirement of the user can be met, thereby improving user experience.

An application interface display manner in the application interface display method provided in this application is further described below by using the foregoing calculator application and video application, a browser application, and a game application (for example, a game application 1 and a game application 2) as examples.

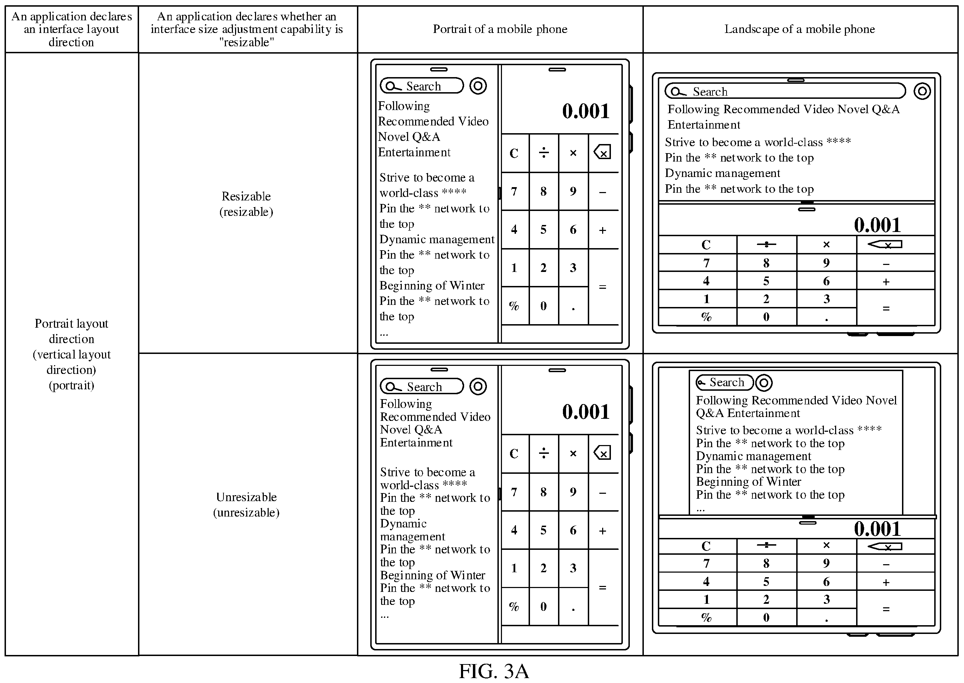

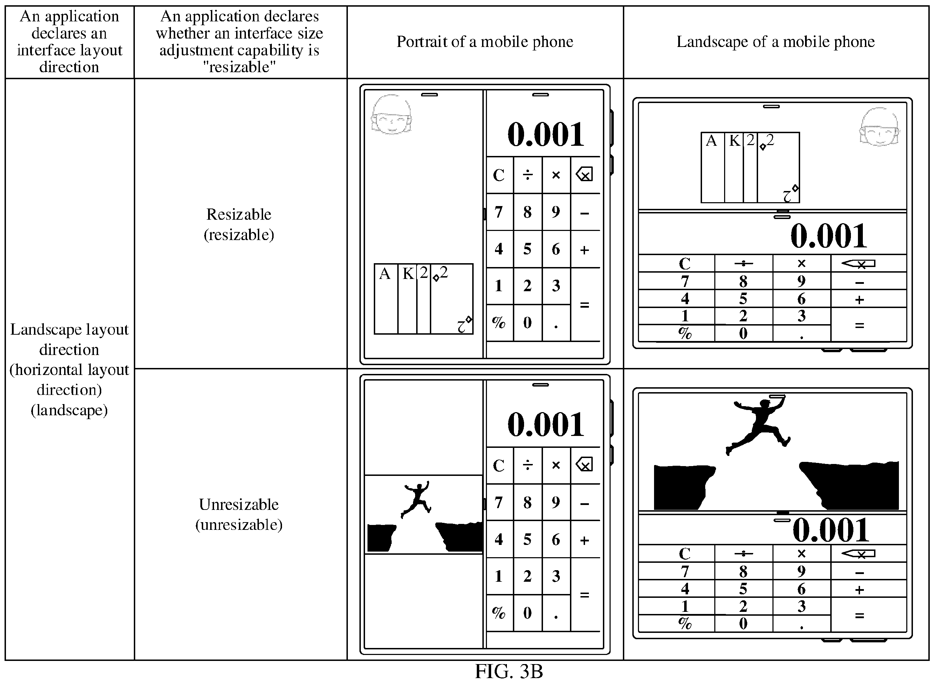

As shown in FIG. 3A and FIG. 3B, for the calculator application, if the calculator application declares that an interface layout direction supported by the calculator application includes the portrait (portrait) layout direction and the landscape (landscape) layout direction, regardless of whether an interface size adjustment capability declared by the calculator application is that a size is adjustable (resizable) or that a size is unadjustable (unresizable), the foldable-screen mobile phone displays, in both the portrait state and the landscape state (that is, when the screen direction is the portrait direction and the landscape direction), the application interface of the calculator application in a split-screen window in a size that fully covers the split-screen window and in an interface layout direction corresponding to a current screen direction (for example, if the screen direction is the landscape direction, the application interface of the calculator application is horizontally displayed in the landscape layout direction; or if the screen direction is the portrait direction, the application interface of the calculator application is vertically displayed in the portrait layout direction).

As shown in FIG. 3A, for the browser application, if the browser application declares that an interface layout direction supported by the browser application is the portrait layout direction, and declares that an interface size adjustment capability of the browser application is that a size is adjustable, the foldable-screen mobile phone displays, in both the portrait state and the landscape state (that is, when the screen direction is the portrait direction and the landscape direction), the application interface of the calculator application in a split-screen window in a size that fully covers the split-screen window and in an interface layout direction corresponding to a current screen direction (that is, an interface layout direction the same as the current screen direction) (for example, if the screen direction is the landscape direction, the application interface of the calculator application is horizontally displayed in the landscape layout direction; or if the screen direction is the portrait direction, the application interface of the calculator application is vertically displayed in the portrait layout direction). If the browser application declares that the interface layout direction supported by the browser application is the portrait layout direction, and declares that the interface size adjustment capability of the browser application is that a size is unadjustable, the foldable-screen mobile phone vertically displays, in the portrait state (that is, when the screen direction is the portrait direction), the application interface of the calculator application in a split-screen window in a size that fully covers the split-screen window; and the foldable-screen mobile phone vertically displays, in the landscape state (that is, the screen direction is the landscape direction), the application interface of the calculator application in a split-screen window in a size that does not fully cover the split-screen window.

As shown in FIG. 3B, for the game application (for example, a poker game-game application 1), if the game application declares that an interface layout direction supported by the game application is the landscape layout direction, and declares that an interface size adjustment capability of the game application is that a size is adjustable, the foldable-screen mobile phone displays, in both the portrait state and the landscape state (that is, when the screen direction is the portrait direction and the landscape direction), an application interface of the game application in a split-screen window in a size that fully covers the split-screen window and in an interface layout direction corresponding to a current screen direction (for example, if the screen direction is the landscape direction, the application interface of the game application is horizontally displayed in the landscape layout direction; or if the screen direction is the portrait direction, the application interface of the game application is vertically displayed in the portrait layout direction).

As shown in FIG. 3B, for the video application, if the video application declares that an interface layout direction supported by the video application is the landscape layout direction, and declares that an interface size adjustment capability of the video application is that a size is unadjustable, the foldable-screen mobile phone horizontally displays, in the portrait state (that is, when the screen direction is the portrait direction), the video application in a split-screen window in a size that does not fully cover the split-screen window; and the foldable-screen mobile phone horizontally displays, in the landscape state (that is, the screen direction is the landscape direction), the application interface of the video application in a split-screen window in a size that fully covers the split-screen window.

The application interface display method provided in this implementation is applied to a split-screen scenario. For an application that cannot be well adapted to a split-screen window, the foldable-screen mobile phone may display an application interface of the application in the split-screen window in a size that does not fully cover the split-screen window and in an interface layout direction supported by the application. In this way, the foldable-screen mobile phone can normally display the application interface of the application in the split-screen window, to avoid an abnormal display case such as deformation of the application interface, so as to meet a user requirement, thereby improving user experience.

In this implementation, when the foldable-screen mobile phone is applied to a split-screen scenario, a manner in which the foldable-screen mobile phone displays an application interface of an application in a split-screen window in a size that does not fully cover the split-screen window and in an interface layout direction supported by the application, and displays an application interface of an application in another split-screen window in a size that fully covers the split-screen window and in an interface layout direction that is supported by the application and that corresponds to a current screen direction may be referred to as a display manner in a compatibility mode. To be specific, in a split-screen scenario (for example, an up-down split-screen scenario or a left-right split-screen scenario), the mobile phone may display, in the compatibility mode based on an actual situation, an application interface corresponding to an application. Therefore, for an application that is not well adapted to a split-screen, an application interface of the application can be displayed in a split-screen window in a size that does not fully cover the split-screen window and in an interface layout direction supported by the application, to resolve a problem exists in display of an application interface in a scenario of switching between left-right split-screen (that is, vertical split-screen) and up-down split-screen (that is, horizontal split-screen), thereby improving a display effect of the application interface and improving user experience.

Further, in the application interface display method provided in this implementation of this application, in a process of displaying an application interface of an application in a split-screen window in a size that does not fully cover the split-screen window, the foldable-screen mobile phone further needs to determine a preset size of the application interface corresponding to the application, uses the preset size as the size that does not fully cover the split-screen window, and displays the application interface of the application in the split-screen window in the size that does not fully cover the split-screen window. The preset size (as an example of a first preset size) may be, for example, any one of a first size, a second size, and a third size. The first size (also referred to as a 0:0 size) is a size obtained after an original interface size of an application interface of an application is adjusted (for example, proportionally scaled down) based on a preset proportion (that is, a first preset proportion). The original interface size may be, for example, a size for displaying an application interface in full screen, or a default original size of an application. The preset proportion may be set based on a size of a display screen of the foldable-screen mobile phone, a size of a split-screen window, and the like. The second size is a size that corresponds to the first size and whose aspect ratio (aspect ratio) is 4:3 (as an example of a first aspect ratio). The third size is a size that corresponds to the first size and whose aspect ratio is 16:9 (as an example of a second aspect ratio). The original interface size, the first size, the second size, the third size, and the preset proportion (as an example of the first preset proportion or a second preset proportion) all may be specifically set based on a requirement, and adjusting proportions corresponding to a width and a height in the preset proportion may be the same or different.

The preset size (as a second preset size) may be, for example, any one of a fourth size, a fifth size, and a sixth size. The fourth size (also referred to as a 0:0 size) is a size obtained after an original interface size of an application interface of an application is adjusted (for example, scaled down) based on a preset proportion (that is, a second preset proportion). The preset proportion may be set based on a size of a display screen of the foldable-screen mobile phone, a size of a split-screen window, and the like. The fifth size is a size that corresponds to the fourth size and whose aspect ratio (aspect ratio) is 4:3 (as an example of a first aspect ratio). The sixth size is a size that corresponds to the fourth size and whose aspect ratio is 16:9 (as an example of a second aspect ratio). The fourth size, the fifth size, the sixth size, and the preset proportion all may be specifically set based on a requirement.

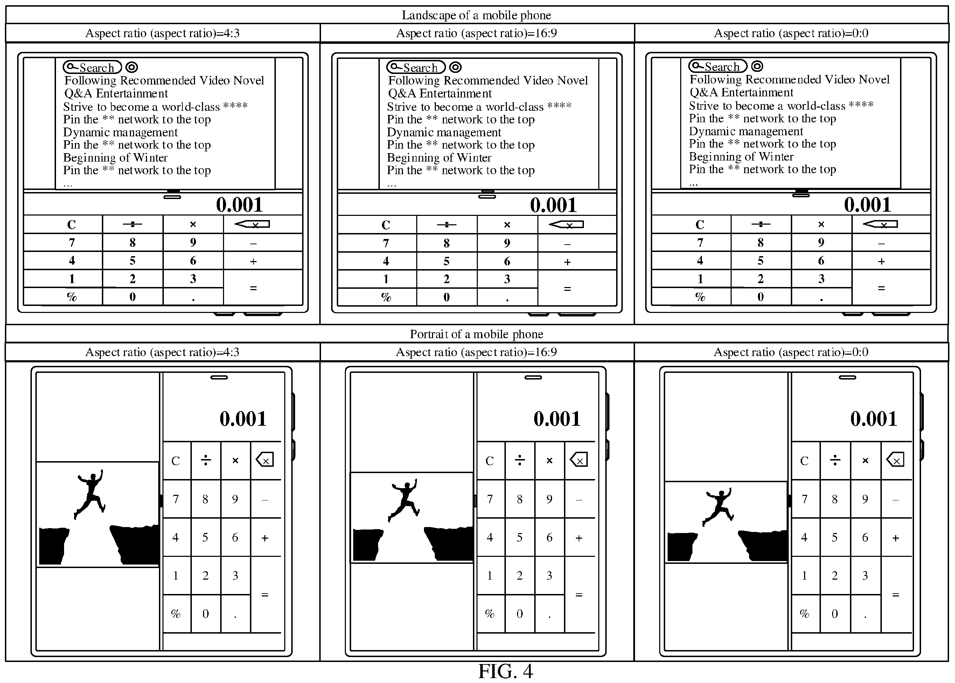

As shown in FIG. 4, when the screen of the foldable-screen mobile phone is in the landscape state (that is, in a case of up-down split-screen or horizontal split-screen), the foldable-screen mobile phone horizontally displays the application interface of the calculator application in a lower split-screen window in a manner of fully covering the split-screen window, and vertically displays the application interface of the browser application in an upper split-screen window in manner of not fully covering the split-screen window. The application interface of the browser application may be in the first size (that is, may be in the 0:0 size), may be in the second size (that is, may be in the 4:3 size), or may be in the third size (that is, may be in the 16:9 size).

In addition, as shown in FIG. 4, when the screen of the foldable-screen mobile phone is in the portrait state (that is, in a case of left-right split-screen or vertical split screen), the foldable-screen mobile phone vertically displays the application interface of the calculator application in a right split-screen window in a manner of fully covering the split-screen window, and horizontally displays the application interface of the video application in a left split-screen window in a manner of not fully covering the split-screen window. The application interface of the video application may be in the first size (that is, may be in the 0:0 size), may be in the second size (that is, may be in the 4:3 size), or may be in the third size (that is, may be in the 16:9 size).

In this way, in a process of displaying an application interface of an application in a split-screen window in a size that does not fully cover the split-screen window, the foldable-screen mobile phone can display the application interface of the application based on preset sizes (for example, different sizes such as the foregoing first size, second size, and third size) corresponding to different preset applications, to achieve different display effects without affecting application function display and user operations. This can provide a better visual display effect for the user compared with a size display manner of providing only one proportionally scaled-down original interface size, thereby effectively improving user experience.

Further, this application further provides an application interface display method, applied to the foregoing foldable-screen mobile phone. In a split-screen scenario, the foldable-screen mobile phone may determine a display manner of an application interface of an application to-be in split-screen in a corresponding split-screen window based on a screen direction of the foldable-screen mobile phone, an interface layout direction supported by the application to-be in split-screen, an interface size adjustment capability of the application to-be in split-screen, and whether the application to-be in split-screen is a preset application, and display the application interface of the application to-be in split-screen in the corresponding split-screen window in the determined display manner, that is, display a corresponding split-screen interface.

Whether the application to-be in split-screen is the preset application may be, for example, whether the application to-be in split-screen is an application in a preset whitelist. If the application to-be in split-screen is an application in the preset whitelist, it is considered that the application to-be in split-screen is the preset application; or if the application to-be in split-screen is not an application in the preset whitelist, it is considered that the application to-be in split-screen is not the preset application.

Applications in the whitelist may be, for example, some applications, such as a video application, that can be normally displayed in a split-screen window in a size that does not fully cover the split-screen window and in interface layout directions supported by the applications, and that can meet a use requirement of a user. Therefore, applications that do not belong to the whitelist may be, for example, some applications that cannot be normally displayed in a split-screen window in a size that does not fully cover the split-screen window and in an interface layout direction supported by the applications, and/or that cannot meet a use requirement of a user. For example, if application interfaces of some applications (for example, some game applications and drawing applications that require a user to perform an operation on local details) are displayed in a split-screen window in a size that does not fully cover the split-screen window and in interface layout directions supported by the applications, the interfaces of the applications may be very small, and cannot meet a use requirement of the user. Certainly, an application in the whitelist may be selected and set based on a requirement.

In the method, for an application to-be in split-screen that supports an interface layout direction different from a current screen direction, the foldable-screen mobile phone may further determine whether the application to-be in split-screen is an application in the preset whitelist. If it is determined that the application to-be in split-screen is an application in the preset whitelist, it indicates that the application to-be in split-screen is the preset application, and can be displayed in a manner of not fully covering a split-screen window. In this case, the foldable-screen mobile phone further determines an interface size adjustment capability of the application to-be in split-screen, and determines a display manner of an application interface of the application to-be in split-screen in a split-screen window based on the interface size adjustment capability of the application to-be in split-screen. If the interface size adjustment capability of the application to-be in split-screen is that a size is adjustable, the application interface of the application to-be in split-screen is displayed in a corresponding split-screen window in a size that fully covers the split-screen window and in an interface layout direction the same as the current screen direction of the electronic device. If the interface size adjustment capability of the application to-be in split-screen is that a size is unadjustable, the application interface of the application to-be in split-screen is displayed in a corresponding split-screen window in a size that does not fully cover the split-screen window and in an interface layout direction different from the current screen direction of the electronic device. If it is determined that the application to-be in split-screen is not an application in the preset whitelist, it indicates that the application to-be in split-screen cannot be displayed in the manner of not fully covering a split-screen window, and the foldable-screen mobile phone does not perform a screen splitting operation (that is, does not display the application in a split-screen manner) on the application to-be in split-screen. In addition, the foldable-screen mobile phone may further pop up, on the display screen, prompt information such as "** application does not support screen splitting currently" or "** application does not support display in the compatibility mode", to prompt a user.

The following describes a structure of a mobile phone that is used as an example of an electronic device provided in an implementation of this application.

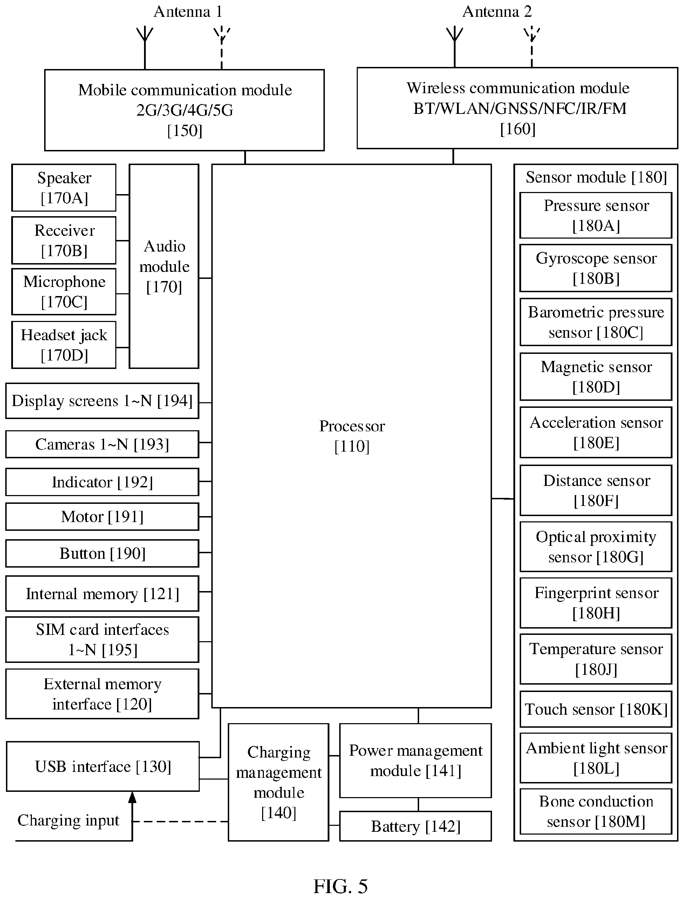

Referring to FIG. 5, FIG. 5 is a schematic diagram of a structure of a mobile phone.

The mobile phone may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, and a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application does not constitute a specific limitation on the mobile phone. In some other embodiments of this application, the mobile phone may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The processor 110 may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

A wireless communication function of the mobile phone may be implemented by using the antenna 1, the antenna 2, the mobile communication module 150, the wireless communication module 160, the modem processor, the baseband processor, and the like. The mobile communication module 150 may provide a solution for wireless communication that is applied to the mobile phone and that includes 2G/3G/4G/5G and the like. The wireless communication module 160 may provide a solution for wireless communication that is applied to the mobile phone and that includes a wireless local area network (wireless local area networks, WLAN) (for example, a wireless fidelity (wireless fidelity, Wi-Fi) network), Bluetooth (Bluetooth, BT), and the like.

The mobile phone implements a display function by using the GPU, the display screen 194, the application processor, and the like. The processor 110 may include one or more GPUs that execute program instructions to generate or change displayed information.

The display screen 194 is configured to display an image, a video, and the like. The display screen 194 includes a display panel. In some embodiments, the mobile phone may include one or N display screens 194, where N is a positive integer greater than 1.

The internal memory 121 may be configured to store computer-executable program code, and the executable program code includes instructions. The processor 110 performs various function applications and data processing of the mobile phone by running instructions stored in the internal memory 121 and/or the instructions stored in the memory disposed in the processor 110, for example, performs processing related to the application interface display method provided in the implementations of this application.

The pressure sensor 180A is configured to sense a pressure signal, and may convert the pressure signal into an electrical signal. In some embodiments, the pressure sensor 180A may be disposed on the display screen 194. When a touch operation is performed on the display screen 194, the mobile phone detects intensity of the touch operation by using the pressure sensor 180A. The mobile phone may also calculate a touch position based on a detected signal of the pressure sensor 180A. In some embodiments, touch operations performed at a same touch position but having different touch operation intensity may correspond to different operation instructions. For example, an operation of pressing and sliding a screen is determined.

The touch sensor 180K is also referred to as a "touch control device". The touch sensor 180K may be disposed on the display screen 194. The touch sensor 180K and the display screen 194 form a touchscreen, also referred to as a "touch control screen". The touch sensor 180K is configured to detect a touch operation performed on or near the touch sensor. The touch sensor 180K may transfer the detected touch operation to the application processor to determine a touch event type. A visual output related to the touch operation may be provided by using the display screen 194. In some other embodiments, the touch sensor 180K may alternatively be provided on a surface of the mobile phone, in a position different from that of the display screen 194.

The following describes a software system of the mobile phone.

The software system of the mobile phone may use a layered architecture, an event-driven architecture, a microkernel architecture, a microservice architecture, or a cloud architecture. In this embodiment of this application, an Android system with a layered architecture is used as an example to describe a software structure of the mobile phone.

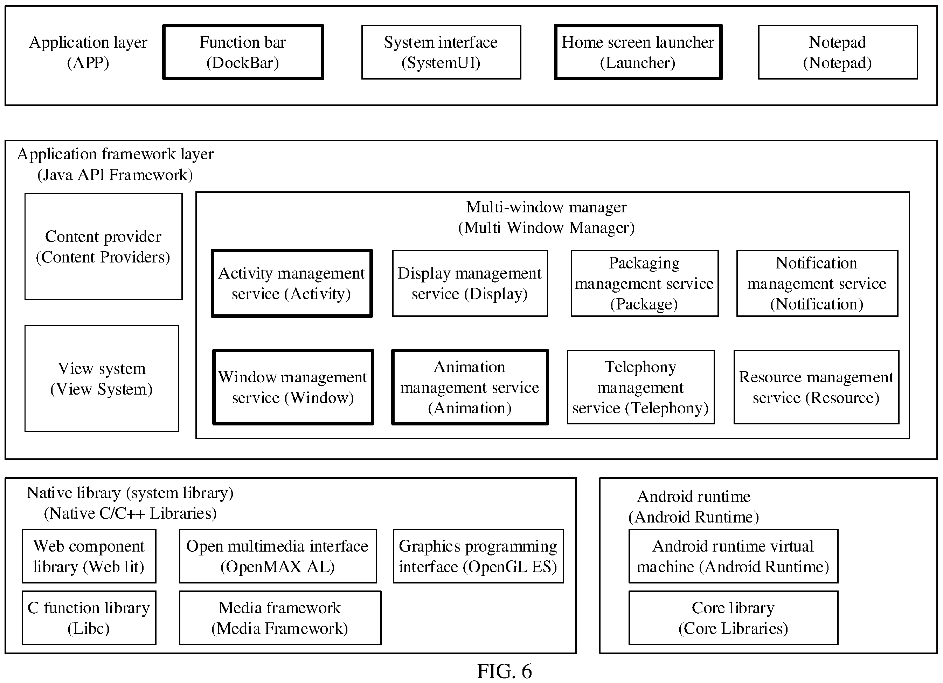

FIG. 6 is an example of a block diagram of a software structure of a mobile phone.

In the layered architecture, software is divided into several layers, and each layer has a clear role and task. The layers communicate with each other by using a software interface. In some embodiments, the Android system is divided into four layers from top to bottom: an application (Application, APP) layer, an application framework (Application Framework) layer, an Android runtime (Android Runtime) and system library, and a kernel layer.

The application layer may include a series of application packages.

As shown in FIG. 6, the application package may include applications such as a function bar (such as DockBar), a system interface (System User Interface (UI)) management application, a home screen launcher (Launcher), and Notepad (Notepad). Certainly, the application layer may further include applications such as Camera, Gallery, and Settings.

The function bar mainly provides a function of entering a split-screen, for example, provides a function of entering a split-screen from an application or a function of entering a split-screen from a floating window.

The home screen launcher mainly provides a task switching manager function.

The application framework layer provides an application programming interface (application programming interface, API) and a programming framework, for example, a Java API Framework, for the applications at the application layer. The application framework layer includes some predefined functions.

As shown in FIG. 6, the application framework layer may include a content provider (Content Providers), a view system (View System), and a multi-window manager (Multi Window Manager).

The multi-window manager includes an activity (Activity) management service, a window (Window) management service, an animation (Animation) management service, a display (Display) management service, a packaging (Package) management service, a telephony (Telephony) management service, a notification (Notification) management service, and a resource (Resource) management service.

The content provider is configured to store and obtain data, and enable the data to be accessible to an application. The data may include a video, an image, audio, calls that are made and answered, a browsing history and bookmarks, a phone book, and the like.

The view system includes visual controls, for example, a control for displaying a text and a control for displaying a picture. The view system may be configured to build an application. A display interface may include one or more views. For example, a display interface including an SMS message notification icon may include a view for displaying a text, a view for displaying a picture, and a display interface of an application.

The activity management service is used to manage various activity tasks in the mobile phone and provide a capability of a split-screen task manager.

The window management service is used to manage a window program. The window management service may obtain a size of a display screen, determine whether there is a function bar, lock a screen, take a screenshot, and the like, and provide a capability of a split-screen task manager.

The animation management service mainly provides a motion effect capability of a system, and is used to complete processing related to animation display and switching of the mobile phone, for example, implement a motion effect of entering a split-screen from a full-screen or a motion effect of entering a full-screen from a split-screen in a screen splitting process.

The display management service may be used to obtain a touch instruction of a user from the notification management service. Further, the display management service may display to-be-displayed content, that is, content currently displayed on the display screen, on the display screen based on a notification message corresponding to the touch instruction.

The telephony management service is used to provide a communication function of the electronic device 100, for example, call status management (including answering, hanging up, or the like).

The resource management service provides various resources for an application, for example, a localized string, an icon, a picture, a layout file, and a video file.

The notification management service enables an application to display notification information in a status bar, and may be used to convey a notification-type message that may automatically disappear after a short stay without requiring user interaction. For example, the notification management service is used to notify a message prompt or the like. The notification management service may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert sound is made, the electronic device vibrates, or an indicator light blinks.

The Android runtime includes a core library (Core Libraries) and an Android runtime virtual machine (that is, a virtual machine). The Android runtime is responsible for scheduling and management of the Android system.

The core library includes two parts: One part is a functional function that needs to be invoked by a java language, and the other part is a core library of Android.

The application layer and the application framework layer run in the virtual machine. The virtual machine executes java files of the application layer and the application framework layer as binary files. The virtual machine is configured to perform functions such as object lifecycle management, stack management, thread management, security and exception management, and garbage collection.

The system library may also be referred to as a native library, for example, Native C/C++ Libraries, and includes a plurality of functional modules.

For example, as shown in FIG. 6, the native library includes a Web component library (Web lit), a C function library (Libc), an open multimedia interface (OpenMAX AL) function, a graphics programming interface (for example, OpenGL ES) function, a media framework (Media Framework) function, and the like.

The kernel layer (not shown in the figure) is a layer between hardware and software. The kernel layer includes at least a display driver, a camera driver, an audio driver, and a sensor driver.

In this implementation, implementation of an application interface display method mainly relates to the application layer and the application framework layer in the overall framework, and mainly relates to the function bar, the home screen launcher, the activity management service, the window management service, the animation management service, and the like that are described above. An implementation process of the application interface display method is described below, and is not described herein.

Certainly, the system architecture of the mobile phone provided in this implementation may alternatively be other system architectures such as a Magic OS system architecture, which may be selected and set based on a requirement.

The application interface display method provided in this application is further described below with reference to an interface diagram of an electronic device.

The application interface display method provided in this application is first further described below by using a foldable-screen mobile phone 100 (which is briefly referred to as a mobile phone 100 below) that includes only one display screen (that is, a screen) as an example.

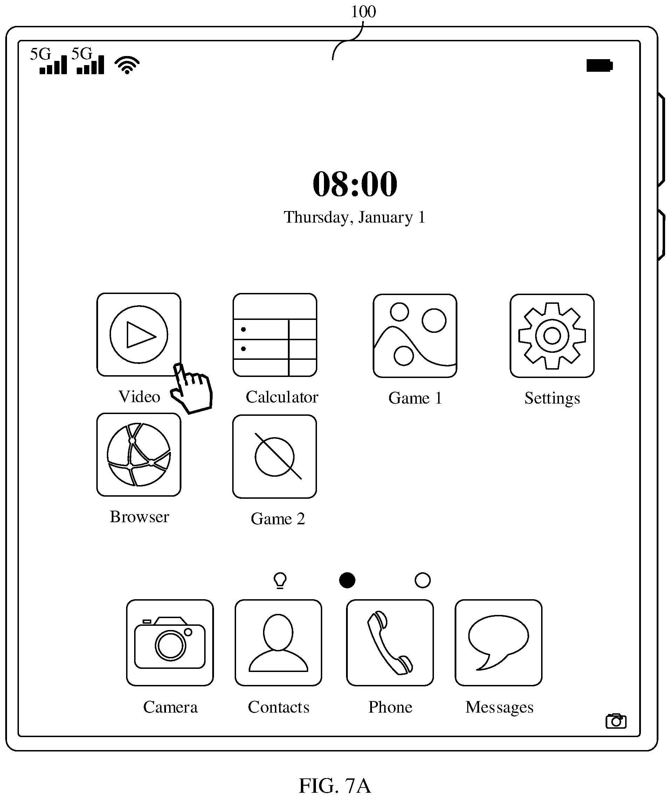

As shown in FIG. 7A, the mobile phone 100 is in a portrait state, and the display screen of the mobile phone 100 displays a plurality of applications such as a calculator application, a video application, a browser application, a game application 1, and a game application 2.

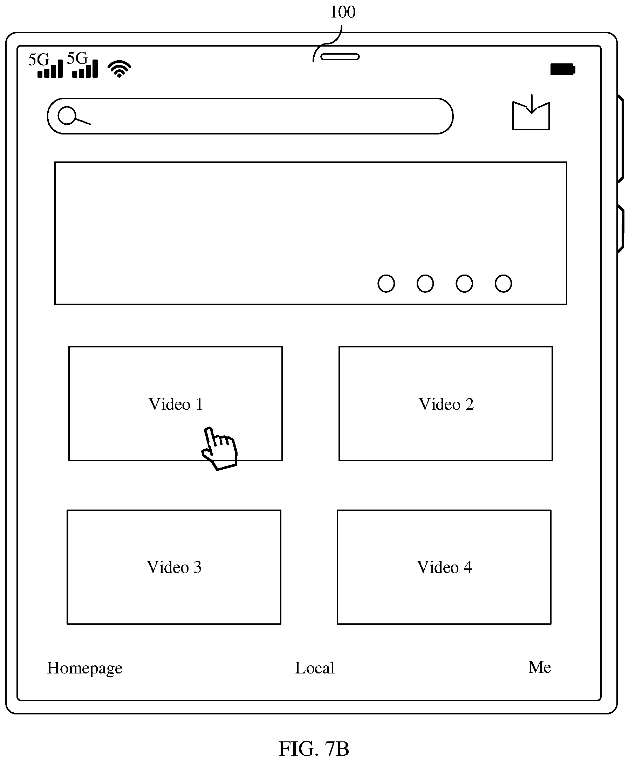

As shown in FIG. 7A, if the mobile phone 100 receives a tap operation performed by a user on the video application, the video application is enabled, and a display interface shown in FIG. 7B is displayed. The display interface is a main interface of the video application, and includes a plurality of videos.

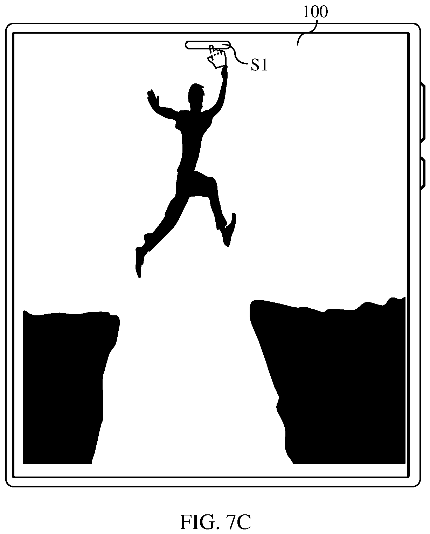

Further, as shown in FIG. 7B, if the mobile phone 100 receives a tap operation performed by the user on the video 1, the video 1 is enabled, and a video play interface shown in FIG. 7C is displayed, that is, the mobile phone 100 displays the play interface of the video 1 on the display screen of the mobile phone 100 in full screen.

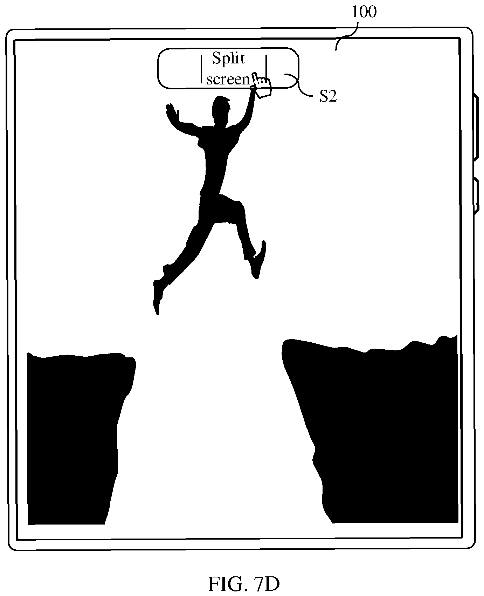

Further, as shown in FIG. 7C, a function bar (that is, a top dock bar) S1 is further displayed at a top of the display screen of the mobile phone 100, and the user may perform screen splitting by operating the function bar S1. For example, as shown in FIG. 7C, if the mobile phone 100 receives a tap operation performed by the user on the function bar S1, as shown in FIG. 7D, the mobile phone 100 unfolds the function bar S1 to display a function bar S2, where the function bar S2 includes a "split screen" control (as an example of a first interface).

As shown in FIG. 7D, if the mobile phone 100 receives a tap operation (as an example of a first operation) performed by the user on the "split screen" control, the mobile phone 100 performs screen splitting processing to divide the screen into two split-screens in a left-right split-screen (that is, vertical split-screen) manner, displays an application interface of the video application in a left split-screen window, and displays another interface in a right split-screen window.

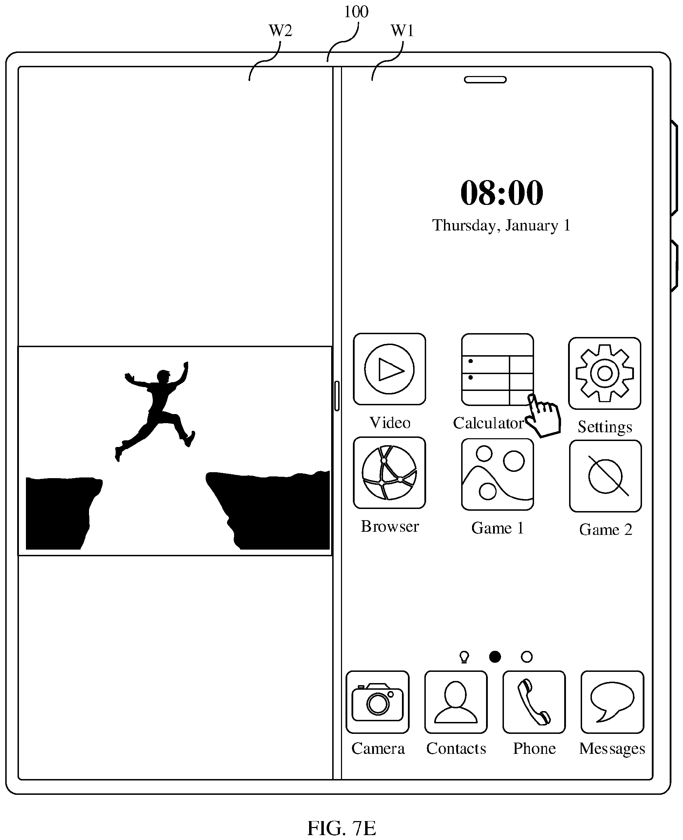

In this implementation, in a process of displaying the application interface of the video application in the left split-screen window, the mobile phone 100 first needs to determine whether the video application supports an interface layout direction the same as a current screen direction of the mobile phone 100, that is, determines whether the video application supports a portrait layout direction. If the mobile phone 100 determines that the video application supports only a landscape layout direction and does not support the portrait layout direction, the mobile phone 100 further determines an interface size adjustment capability declared by the video application. If the mobile phone 100 determines that the video application declares that the interface size adjustment capability of the video application is that a size is unadjustable, as shown in FIG. 7E, the mobile phone 100 horizontally displays the application interface (as an example of a second interface) of the video application in the left split-screen window W2 in a size that does not fully cover the split-screen window. This can avoid a problem that when the video application is in a split-screen state, the video play interface is deformed due to stretching because the video application is not well adapted to the vertical split-screen window W2, affecting normal display of a picture played in a video, and consequently affects user experience. In other words, the mobile phone 100 can normally display the application interface of the video application in a manner of not fully covering a split-screen window, to meet a viewing requirement of the user, thereby improving user experience.

In addition, as shown in FIG. 7E, the mobile phone 100 may display icons of a plurality of applications such as the calculator application, the browser application, the game application 1, and the game application 2 in the right split-screen window W1 (the display interface may be used as an example of the second interface, or may be used as another example of the first interface). Therefore, as shown in FIG. 7E, if the mobile phone 100 receives a tap operation performed by the user on the calculator application (as another example of the first operation), it is determined that the calculator application needs to be enabled, and an application interface of the calculator application needs to be displayed in the split-screen window W1.

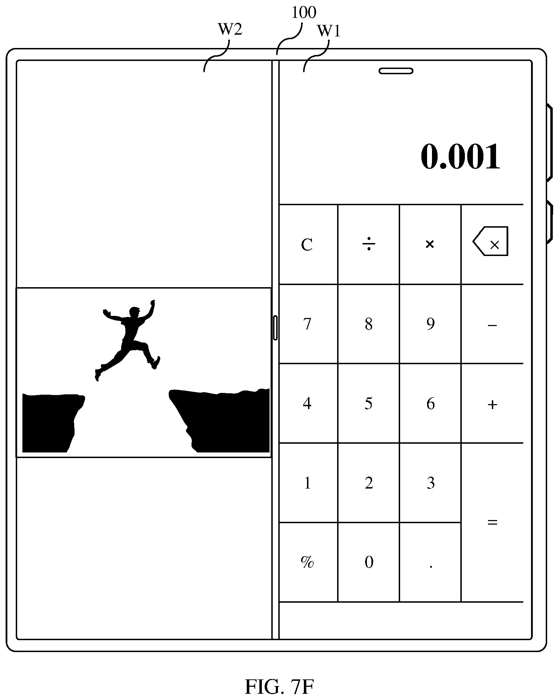

In this implementation, in a process of displaying the application interface of the calculator application in the split-screen window W1, the mobile phone 100 first needs to determine whether the calculator application supports an interface layout direction the same as a current screen direction of the mobile phone 100, that is, determines whether the calculator application supports the portrait layout direction. If the mobile phone 100 determines that the calculator application supports the portrait layout direction, as shown in FIG. 7F, the mobile phone 100 vertically displays the application interface of the calculator application in the split-screen window W1 in a manner of fully covering the split-screen window W1. In this way, the application interface of the calculator application can be displayed in the split-screen window W1 in a size that fully covers the split-screen window, thereby ensuring user experience.

In this implementation, that the mobile phone 100 horizontally displays the application interface of the video application in the split-screen window W2 in the size that does not fully cover the split-screen window, and displays the application interface of the calculator application in the split-screen window W1 in the size that fully covers the split-screen window may be understood as a manner of displaying split-screen windows in a compatibility mode, and application interfaces of different applications may be normally displayed in different manners in the split-screen windows, thereby improving user experience.

Further, in this implementation, if the user rotates the mobile phone 100 by 90 degrees in a process of using the mobile phone 100 (for example, rotating the mobile phone 100 by 90 degrees clockwise is used as another example of the first operation), to adjust the mobile phone 100 from the portrait state to a landscape state, the mobile phone 100 detects that a screen direction of the mobile phone 100 changes, that is, the mobile phone 100 detects that the screen direction of the mobile phone 100 is adjusted from the portrait direction to the landscape direction. Therefore, the mobile phone 100 determines that display manners of the application interfaces of the calculator application and the video application in the split-screen windows need to be re-determined based on a current screen direction of the mobile phone 100, interface layout directions supported by the calculator application and the video application, and interface size adjustment capabilities of the calculator application and the video application.

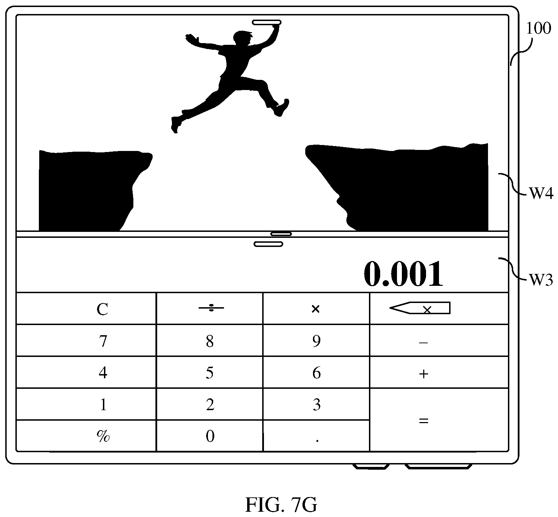

For example, as described above, the mobile phone 100 determines that the video application supports the landscape layout direction and the calculator application also supports the landscape layout direction, that is, both the video application and the calculator application support an interface layout direction the same as the current screen direction of the mobile phone 100. Therefore, as shown in FIG. 7G, after the screen direction of the mobile phone 100 is adjusted from the portrait direction to the landscape direction, a split-screen direction of the mobile phone 100 is adjusted from left-right split-screen to up-down split-screen, and the mobile phone 100 displays two split-screen windows (a split-screen window W3 and a split-screen window W4) in an up-down split-screen manner. In addition, the mobile phone 100 horizontally displays the application interface of the video application in the split-screen window W4 in a size that fully covers the split-screen window W4, and the mobile phone 100 horizontally displays the application interface (as another example of the second interface) of the calculator application in the split-screen window W3 in a size that fully covers the split-screen window W3.

In this way, in a process of using the mobile phone 100, the mobile phone 100 can determine a display manner of an application interface of an application to-be in split-screen in a split-screen window based on a current screen direction of the mobile phone 100, an interface layout direction supported by the application to-be in split-screen, and an interface size adjustment capability of the application. Therefore, in different use states of the mobile phone 100, that is, for the mobile phone 100 with different screen directions, the mobile phone 100 may display a corresponding application interface in a manner of fully covering a split-screen window or not fully covering a split-screen window to display a normal application interface, to meet a use requirement of a user for the mobile phone 100 and different applications, thereby effectively improving user experience.

The application interface display method provided in this application is further described below by using a foldable-screen mobile phone 200 (which is briefly referred to as a mobile phone 200) that includes two display screens (that is, screens) as an example: an inner display screen (which is briefly referred to as an inner screen) and an outer display screen (which is briefly referred to as an outer screen).

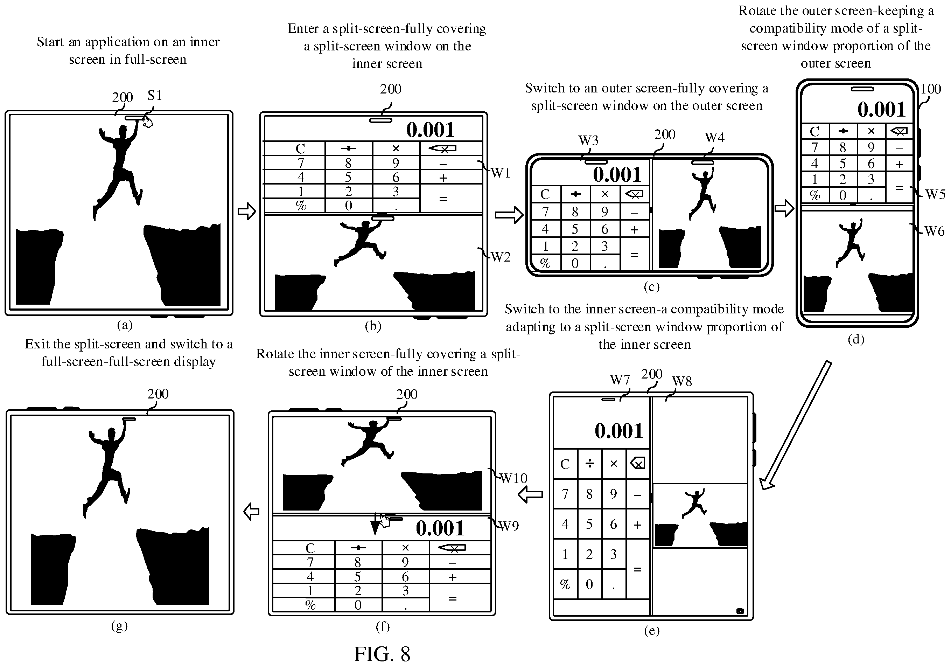

As shown in part (a) of FIG. 8, the mobile phone 200 is in a landscape state, and a top of the mobile phone 100 is located on a right side. The mobile phone 200 starts a video application on the inner screen in full screen, and displays an application interface of the video application on the inner screen of the mobile phone 200 in a full-screen covering manner. In addition, a function bar S1 is displayed on the inner screen of the mobile phone 200.

If the mobile phone 200 receives, for example, the screen splitting operation of a user shown in FIG. 7B-FIG. 7E, the mobile phone 200 determines that a calculator application and the video application need to be displayed in a split-screen manner. If the mobile phone 200 determines that both the calculator application and the video application support a landscape layout direction, and in this case, the inner screen of the mobile phone 200 is in the landscape state, the mobile phone 100 determines that both the calculator application and the video application support an interface layout direction the same as a current screen direction (that is, a landscape direction) of the inner screen, that is, both support the landscape layout direction. Therefore, as shown in part (b) of FIG. 8, the mobile phone 200 displays two split-screen windows (a split-screen window W1 and a split-screen window W2) in an up-down split-screen manner. The split-screen window W1 is located in an upper part, and the split-screen window W2 is located in a lower part. In addition, the mobile phone 200 horizontally displays an application interface of the calculator application in the split-screen window W1 in a size that fully covers the split-screen window W1, and horizontally displays an application interface of the video application in the split-screen window W2 in a size that fully covers the split-screen window W2. In other words, the mobile phone 200 enters a split-screen state, and separately displays the application interfaces of the calculator application and the video application in a manner of fully covering the split-screen windows on the inner screen.

If the mobile phone 200 detects an operation of folding, by the user, the mobile phone 200 downward to fold the inner screen of the mobile phone 200, the mobile phone 200 determines that displayed content on the inner screen needs to be switched to the outer screen of the mobile phone 200 for display. In this case, although the mobile phone 200 is in the landscape state, due to a limitation of a size of the outer screen, the mobile phone 200 cannot perform up-down screen splitting, and can only perform left-right screen splitting. Therefore, as shown in part (c) of FIG. 8, the outer screen of the mobile phone 200 displays two split-screen windows (a split-screen window W3 and a split-screen window W4) when on the outer screen of the mobile phone 200 in left-right split-screen. The split-screen window W3 is located on a left side, and the split-screen window W4 is located on a right side. In addition, the mobile phone 200 determines that both the calculator application and the video application support an interface layout direction the same as a current screen direction (that is, the landscape direction) of the outer screen, that is, both support the landscape layout direction. In this case, the mobile phone 200 horizontally displays the application interface of the video application in the split-screen window W4 in a size that fully covers the split-screen window, and horizontally displays the application interface of the calculator application in the split-screen window W3 in a size that fully covers the split-screen window. In other words, the mobile phone 200 switches from the inner screen to the outer screen, and separately displays the application interfaces of the video application and the calculator application in a manner of fully covering the split-screen windows on the outer screen.

Further, if the user rotates the mobile phone 200 shown in part (c) of FIG. 8 counterclockwise by 90 degrees to adjust the mobile phone 200 to a portrait state, the mobile phone 200 detects that a screen direction of the mobile phone 200 is adjusted to a portrait direction. Therefore, the mobile phone 200 determines that a split-screen direction of the outer screen is adjusted from left-right split-screen to up-down split-screen, and display manners of the application interfaces of the calculator application and the video application in split-screen windows need to be re-determined based on the rotated screen direction of the mobile phone 200, interface layout directions supported by the calculator application and the video application, and interface size adjustment capabilities of the calculator application and the video application.

Therefore, as shown in part (d) of FIG. 8, the mobile phone 200 displays two split-screen windows (a split-screen window W5 and a split-screen window W6) on the outer screen of the mobile phone 200 in an up-down split-screen. The split-screen window W5 is located in an upper part, and the split-screen window W6 is located in a lower part. If the mobile phone 200 determines that the calculator application supports an interface layout direction the same as a current screen direction (that is, the portrait direction) of the outer screen, that is, supports a portrait layout direction, and the video application does not support the interface layout direction the same as the current screen direction (that is, the portrait direction) of the outer screen, that is, does not support the portrait layout direction, the mobile phone 200 vertically displays the application interface of the calculator application in the split-screen window W5 in a size that fully covers the split-screen window W5, and horizontally displays the application interface of the video application in the split-screen window W6 in a size that does not fully cover the split-screen window W6. In other words, the mobile phone 100 keeps, based on detected information indicating that the outer screen is rotated, display in the split-screen windows on the outer screen, and displays the application interfaces of the video application and the calculator application in a compatibility mode that is adapted to proportions of the split-screen windows on the outer screen.

Further, if the mobile phone 200 detects an operation of opening the inner screen of the mobile phone 200 by the user, the mobile phone 200 determines that displayed content on the outer screen of the mobile phone 200 needs to be switched to the inner screen of the mobile phone 200 for display. Therefore, the mobile phone 200 performs screen splitting processing on the inner screen, and determines display manners of the application interfaces of the calculator application and the video application in split-screen windows based on a screen direction of the inner screen, interface layout directions supported by the calculator application and the video application, and interface size adjustment capabilities of the calculator application and the video application. In this case, the mobile phone 200 determines that the mobile phone 200 is in the portrait state. In addition, the calculator application supports an interface layout direction the same as a current screen direction (that is, the portrait direction) of the inner screen, that is, supports the portrait layout direction, and the video application does not support the interface layout direction the same as the current screen direction (that is, the portrait direction) of the inner screen, that is, does not support the portrait layout direction, and the interface size adjustment capability of the video application is that a size is unadjustable. Therefore, as shown in part (e) of FIG. 8, the mobile phone 200 displays two split-screen windows (a split-screen window W7 and a split-screen window W8) on the inner screen of the mobile phone 200 in a left-right split-screen manner. The split-screen window W7 is located on a left side and the split-screen window W8 is located on a right side. The mobile phone 200 vertically displays the application interface of the calculator application in the split-screen window W7 in a size that fully covers the split-screen window W7, and horizontally displays the application interface of the video application in the split-screen window W8 in a size that does not fully cover the split-screen window W8. In other words, the mobile phone 200 switches to the inner screen to display an application interface of an application, and displays the application interfaces of the video application and the calculator application in a compatibility mode that is adapted to proportions of the split-screen windows on the inner screen.

Further, the user rotates the mobile phone 200 shown in part (e) of FIG. 8 counterclockwise by 90 degrees to adjust the mobile phone 200 to the landscape state. In this case, the mobile phone 200 detects that the screen direction of the mobile phone 200 is adjusted to the portrait direction. Therefore, the mobile phone 200 determines that a split-screen direction of the inner screen needs to be adjusted from left-right split-screen to up-down split-screen, and the mobile phone 200 needs to re-determine display manners of the application interfaces of the video application and the video application in split-screen windows based on the rotated screen direction of the inner screen, interface layout directions supported by the calculator application and the video application, and interface size adjustment capabilities of the calculator application and the video application. In this case, a screen direction of the inner screen is the landscape direction, the calculator application supports the landscape layout direction, and the video application also supports the landscape layout direction, that is, both the calculator application and the video application support an interface layout direction the same as the screen direction of the inner screen. Therefore, as shown in part (f) of FIG. 8, the mobile phone 200 displays two split-screen windows (a split-screen window W9 and a split-screen window W10) on the inner screen of the mobile phone 200 in an up-down split-screen manner. The split-screen window W9 is located in a lower part, and the split-screen window W10 is located in an upper part. In addition, the mobile phone 200 horizontally displays the application interface of the calculator application in the split-screen window W9 in a size that fully covers the split-screen window, and horizontally displays the application interface of the video application in the split-screen window W10 in a size that fully covers the split-screen window. In other words, the mobile phone 200 displays, based on detected information indicating that the inner screen is rotated, the application interfaces of the video application and the calculator application in a manner of fully covering the split-screen windows on the inner screen.

Further, as shown in part (f) of FIG. 8, if the mobile phone 200 receives a pull-down operation performed by the user on a split-screen line (which may also be referred to as a split-screen bar) displayed in the middle of the screen, the mobile phone 200 determines that the mobile phone 200 needs to exit the screen splitting operation, and the mobile phone 200 disables the calculator application. As shown in part (g) of FIG. 8, the mobile phone 200 displays the application interface of the video application on the inner screen in full screen. In other words, the mobile phone 200 exits the split-screen state and switches to a full-screen state, and displays an application interface in full screen.

In this way, in a process of using the mobile phone 200, the mobile phone 200 can determine, based on switching between using the inner screen of the mobile phone 200 and using the outer screen of the mobile phone 200 by the user and adjustment of a direction in which the display screen of the mobile phone 200 is located, and based on an interface layout direction and an interface size adjustment capability that are supported by an application to-be in split-screen of the mobile phone 200, a display manner in which the mobile phone 200 displays an application interface in a split-screen window in different states. Therefore, display of the application interface can be adapted to a current screen status of the mobile phone 200 to display a normal picture, thereby avoiding a case in which interface content occurred is deformed because the application interface is not adapted to a current split-screen, or another case. In other words, the mobile phone 200 can display a normal application interface, to meet a use requirement of a user for the mobile phone 200 and different applications, thereby effectively improving user experience.

In another implementation of this application, the game application 1 may also support only the landscape layout direction, and an interface size adjustment capability of the game application 1 is that "unadjustable". Therefore, the video application shown in FIG. 8 may be directly replaced with the game application 1, to describe a process of displaying an application interface of the game application 1 in different states. Details are not described herein.

The application interface display method provided in this application is further described below by using a bar-type mobile phone 300 (that is, a non-foldable-screen mobile phone, which is briefly referred to as a mobile phone 300 below) as another example of the electronic device provided in this application.

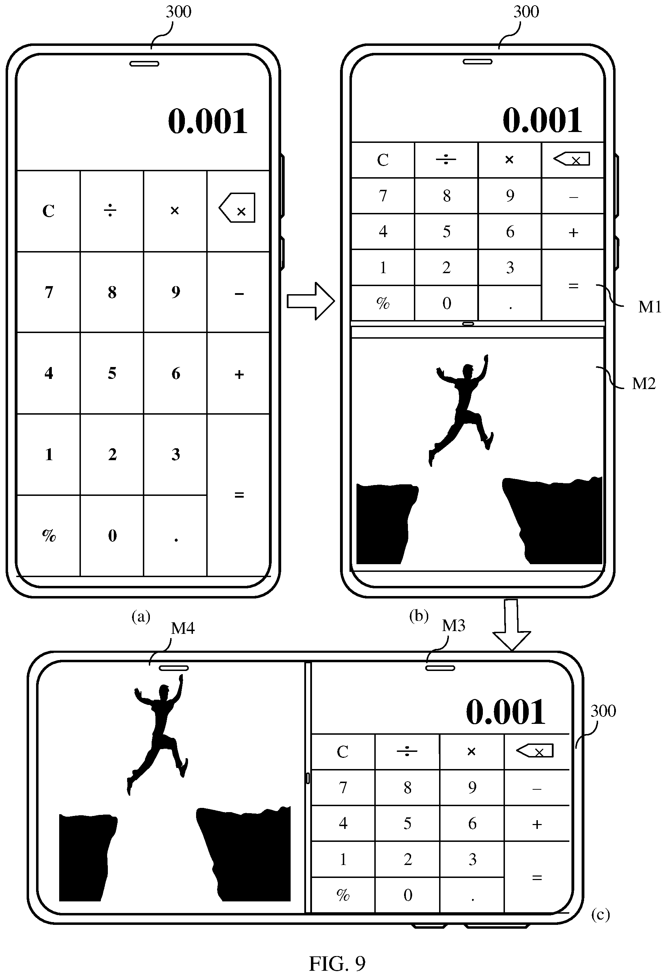

Referring to part (a) of FIG. 9, the mobile phone 300 is in a portrait state, and displays a calculator application. If the mobile phone 300 receives, for example, an operation of sliding from a right side to a left side of the mobile phone 300 by a user, the mobile phone 300 displays a side toolbar. The side toolbar includes a plurality of applications such as a video application, a game application 1, and a browser application. If the mobile phone 300 further receives an operation of dragging an icon of the video application downward from the side toolbar by the user, the mobile phone 300 determines that the calculator application and the video application need to be displayed in a split-screen manner. Therefore, as shown in part (b) of FIG. 9, the mobile phone 300 displays two split-screen windows (a split-screen window M1 and a split-screen window M2) in an up-down split-screen manner. In addition, because the calculator application supports a portrait layout direction, the mobile phone 300 vertically displays an application interface of the calculator application in the split-screen window M1 in a size that fully covers the split-screen window. Because the video application does not support the portrait layout direction, and an interface size adjustment capability of the video application is "unresizable", the mobile phone 300 horizontally displays an application interface of the video application in the split-screen window M2 in a size that does not fully cover the split-screen window.

Further, if the user rotates the mobile phone 300, for example, the user rotates the mobile phone 300 by 90 degrees clockwise to adjust the mobile phone 300 to a landscape state, the mobile phone 300 detects that a screen direction of the mobile phone 300 is adjusted to a landscape direction. Therefore, as shown in part (c) of FIG. 9, the mobile phone 300 displays two split-screen windows (a split-screen window M3 and a split-screen window M4) in a left-right split-screen manner. Because the calculator application also supports a landscape layout direction, the mobile phone 300 horizontally displays the application interface of the calculator application in the split-screen window M3 in a size that fully covers the split-screen window. Because the video application also supports the landscape layout direction, the mobile phone 300 horizontally displays the application interface of the video application in the split-screen window M4 in a size that fully covers the split-screen window.

In this way, the mobile phone 300 can display a normal application interface, to meet a use requirement of a user for the mobile phone 300 and different applications, thereby effectively improving user experience.

The application interface display method provided in this application is further described below by using a tablet computer 400 as another example of the electronic device provided in this application.

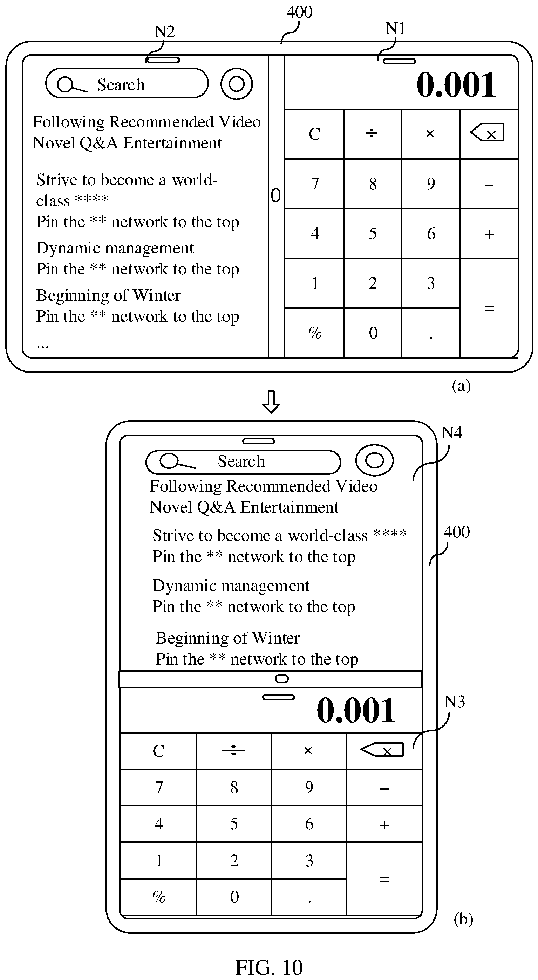

Referring to part (a) of FIG. 10, the tablet computer 400 is in a portrait state. A calculator application supports a portrait layout direction and a landscape layout direction. A browser application supports only the portrait layout direction, and an interface size adjustment capability of the browser application is that a size is adjustable. Therefore, the tablet computer 400 displays two split-screen windows (a split-screen window N1 and a split-screen window N2) in a left-right split-screen manner. The split-screen window N1 is located on a right side, and the split-screen window N2 is located on a left side. In addition, the tablet computer 400 vertically displays an application interface of the calculator application in the split-screen window N1 in a size that fully covers the split-screen window N1, and vertically displays an application interface of the browser application in the split-screen window N2 in a size that fully covers the split-screen window N2.

Further, if a user rotates the tablet computer 400, for example, the user rotates the tablet computer 400 by 90 degrees clockwise to adjust the tablet computer 400 to a landscape state, the tablet computer 400 detects that a screen direction of the tablet computer 400 is adjusted to a landscape direction. Therefore, as shown in part (b) of FIG. 10, the tablet computer 400 displays two split-screen windows (a split-screen window N3 and a split-screen window N4) in an up-down split-screen manner. The split-screen window N3 is located in a lower part, and the split-screen window N4 is located in an upper part. Because the calculator application supports the landscape layout direction, and the browser application does not support the landscape layout direction, but the interface size adjustment capability of the browser application is that a size is adjustable, the tablet computer 400 horizontally displays the application interface of the calculator application in the split-screen window N3 in a size that fully covers the split-screen window, and horizontally displays the application interface of the browser application in the split-screen window N4 in a size that fully covers the split-screen window.

In this way, the tablet computer 400 can display a normal application interface, to meet a use requirement of a user for the tablet computer 400 and an unused application, thereby effectively improving user experience.

In some implementations of this application, in a process in which an electronic device such as the mobile phone 100, the mobile phone 200, the mobile phone 300, or the tablet computer 400 displays an application interface of an application to-be in split-screen in a split-screen window, for an application to-be in split-screen that supports an interface layout direction different from a current screen direction, the electronic device such as the mobile phone 100, the mobile phone 200, the mobile phone 300, or the tablet computer 400 may further determine whether the application to-be in split-screen is an application in a preset whitelist, to determine a display manner of the application interface of the application to-be in split-screen.

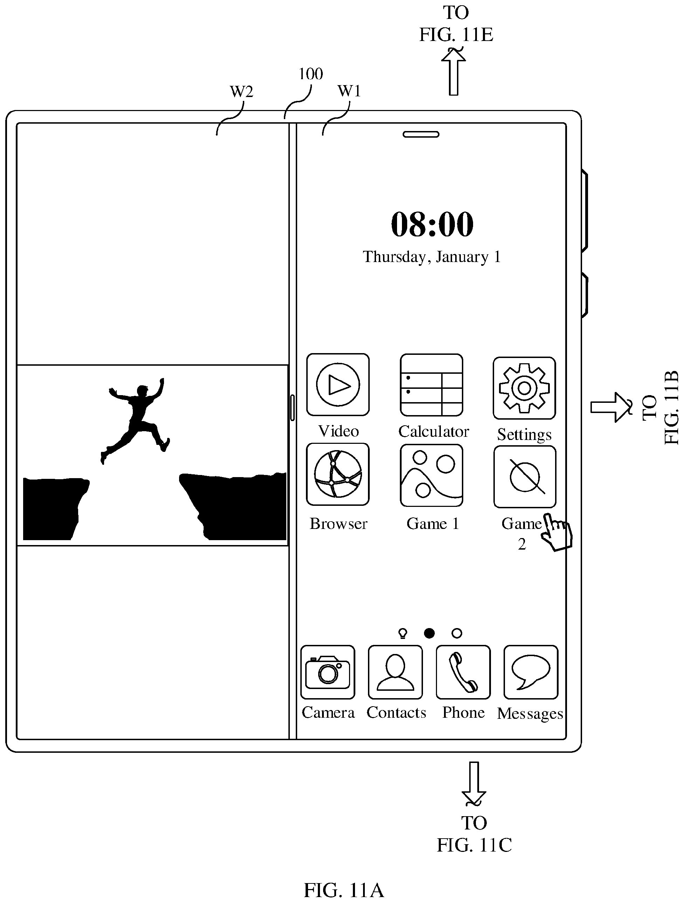

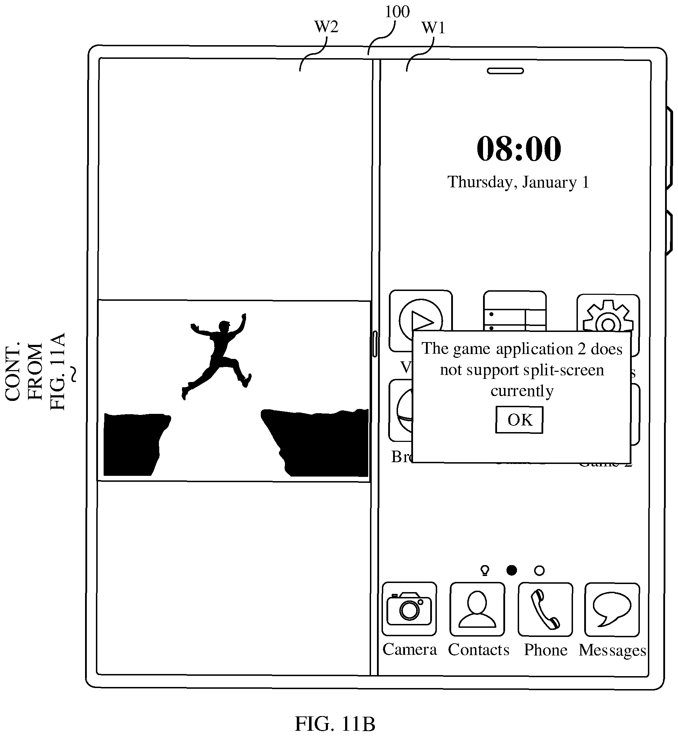

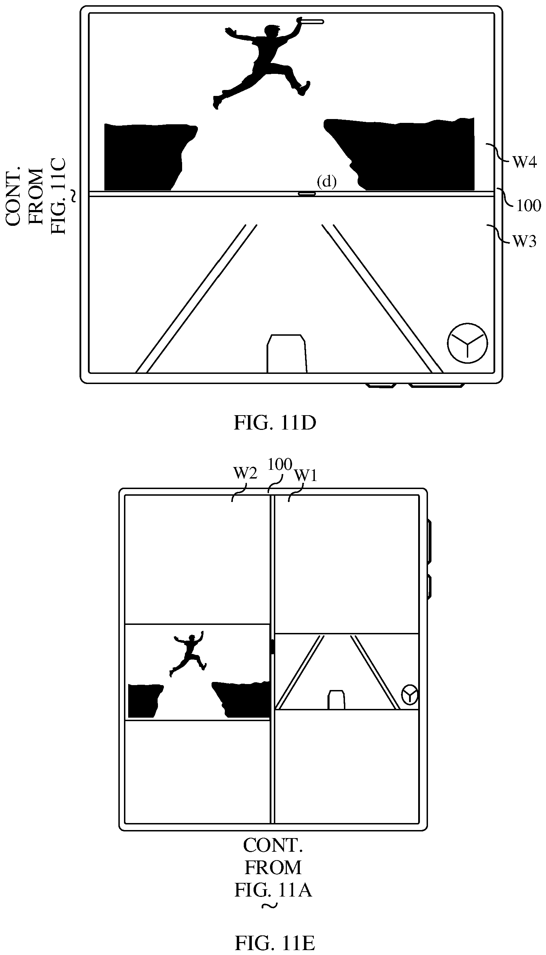

For example, referring to FIG. 11A, if the mobile phone 100 receives a tap operation performed by a user on the game application 2 (which may be, for example, a racing game), the mobile phone 100 determines that an application interface of the game application 2 needs to be displayed in the split-screen window W1. The mobile phone 100 first determines, based on a current screen direction and an interface layout direction supported by the game application 2, that the interface layout direction supported by the game application 2 is the landscape layout direction, which is different from the portrait direction in which a current screen is located. Therefore, the mobile phone 100 further determines whether the game application 2 is an application in the preset whitelist. If the game application 2 is an application in the preset whitelist, the mobile phone 100 further determines whether an interface size adjustment capability of the game application 2 is that a size is adjustable. In addition, if the interface size adjustment capability of the game application 2 is that a size is adjustable, the mobile phone 100 vertically displays the application interface of the game application 2 in the split-screen window W1 in a size that fully covers the split-screen window W1. If the interface size adjustment capability of the game application 2 is that a size is unadjustable, as shown in FIG. 11E, the mobile phone 100 horizontally displays the application interface (as another example of the second interface of a second application) of the game application 2 in the split-screen window W1 in a size that does not fully cover the split-screen window W1. If the game application 2 is not an application in the preset whitelist, as shown in FIG. 11B, the mobile phone 100 displays prompt information "The game application 2 does not support split-screen currently" in the split-screen window W1, that is, the mobile phone 100 does not display the application interface of the game application 2 in the split-screen window W1. In addition, the mobile phone 100 may further display an "OK" control corresponding to the prompt information for use by the user, or the prompt information automatically disappears after preset time.

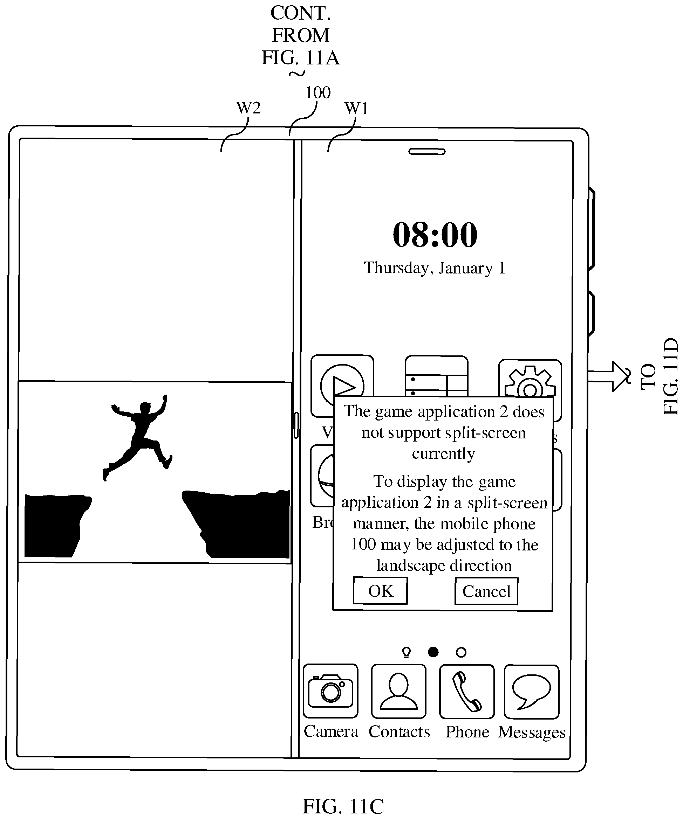

Further, because the mobile phone 100 determines that the interface layout direction supported by the game application 2 is the landscape layout direction, as shown in FIG. 11C, the mobile phone 100 may further display prompt information "To display the game application 2 in split-screen, the mobile phone 100 may be adjusted to the landscape direction", and displays an "OK" control and a "Cancel" control, which are used by the user to determine whether the game application 2 needs to continue to be displayed in split-screen. If the mobile phone 100 detects a tap operation performed by the user on the "OK" control, and the mobile phone 100 is rotated to the landscape state by the user, as shown in FIG. 11D, the mobile phone 100 displays the split-screen window W3 and the split-screen window W4 in an up-down split-screen manner, horizontally displays the application interface of the video application in the split-screen window W4 in a size that fully covers the split-screen window W4, and horizontally displays the application interface of the game application 2 in the split-screen window W3 in a size that fully covers the split-screen window W3. If the mobile phone 100 detects a tap operation performed by the user on the "Cancel" control, the mobile phone 100 continues to display the display interface shown in FIG. 11A.

In this way, the mobile phone 100 can display a normal application interface or does not perform screen splitting, to meet a use requirement of a user for the mobile phone 100 and an unused application, thereby effectively improving user experience.

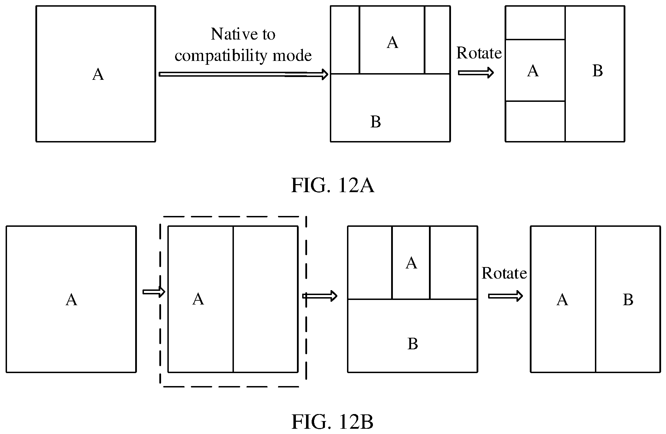

Further, in a split-screen scenario, a process of implementing a split-screen interface by the mobile phone 100 may alternatively be as follows: As shown in FIG. 12A, the mobile phone 100 first displays an interface of an application A in full screen. If the mobile phone 100 detects a screen splitting operation of a user, the mobile phone 100 determines that the application A and an application B need to be displayed in a split-screen manner. The application interface of the application A is not suitable for a horizontal layout, and an application interface of the application B is suitable for the horizontal layout and is also suitable for a vertical layout. Therefore, in both a landscape state and a portrait state, the mobile phone 100 displays a corresponding application interface after proportionally scaling down an original interface size of the application A based on a preset equal proportion. For example, as shown in FIG. 12A, in the landscape state, the mobile phone 100 displays, in an upper split-screen window, an application interface of the application A obtained after the original interface size of the application A is proportionally scaled down, and horizontally displays the application interface of the application B in a lower split-screen window in a size that fully covers the split-screen window. In the portrait state obtained through rotation, the mobile phone 100 still displays, in a left split-screen window, an application interface of the application A obtained after the original interface size of the application A is proportionally scaled down, and vertically displays the application interface of the application B in a right split-screen window in a size that fully covers the split-screen window. This manner may be understood as a display manner in a native to compatibility mode.

However, in this implementation, for the application A that cannot be adapted to the horizontal layout, in both the portrait state and a horizontal state, the application interface of the application A is displayed in a manner of proportionally scaling down the original interface size of the application A. As a result, display of the application interface of the application A is always limited (that is, the application interface is always relatively small), and user experience is affected.

However, the application interface display method provided in this implementation of this application is applied to a split-screen scenario. As shown in FIG. 12B, if the mobile phone 100 displays the interface of the application A in full screen, after performing left-right screen splitting, the mobile phone 100 displays two split-screen windows (a left split-screen window and a right split-screen window), and the mobile phone 100 determines a display manner of an application to-be in split-screen in a split-screen window based on a screen direction of the mobile phone 100. For example, if the mobile phone 100 determines that the mobile phone 100 is in the landscape state, the mobile phone 100 displays two split-screen windows (an upper split-screen window and a lower split-screen window) in up-down split-screen, vertically displays the application interface of the application A in the upper split-screen window in a manner of not fully covering the split-screen window, and horizontally displays the application interface of the application B in a lower split-screen window in a manner of fully covering the split-screen window. If the mobile phone 100 detects an operation of rotating the mobile phone 100 by 90 degrees by the user, the mobile phone determines that the screen direction of the mobile phone 100 is adjusted from a landscape direction to a portrait direction, the mobile phone 100 performs left-right screen splitting, vertically displays the application interface of the application A in a left split-screen window in a size that fully covers the window, and vertically displays the application interface of the application B in a right split-screen window in a size that fully covers the window.

In this way, an application interface of an application can be better displayed for different screen directions and an interface layout direction supported by the application, thereby improving user experience.

In some implementations of this application, in a scenario in which an electronic device such as the mobile phone 100, the mobile phone 200, the mobile phone 300, or the tablet computer 400 displays an application interface of an application in a non-fully covered manner, that is, in a compatibility mode scenario, the electronic device does not display the foregoing function bar S1 (which may also be referred to as a top bar), that is, the hidden function bar S1, in a split-screen window in which the application interface of the application is displayed in the non-fully covered manner, so that the function bar S1 disappears after the electronic device enters the compatibility mode. In addition, the function bar S1 may be detached and disposed in another position to be separately managed and operated, and how a size of the function bar S1 at a top of a window in the compatibility mode is adapted and set may be selected and set based on a requirement.

In some implementations of this application, the foregoing mobile phone 100 is used as an example. In a split-screen state, if the mobile phone 100 receives an operation of invoking a text input method by the user, the mobile phone 100 determines a display manner of the text input method based on a current split-screen mode (that is, a split-screen direction) and a position in which an application that needs to use the text input method is located on the screen. The split-screen mode may be, for example, an up-down split-screen mode (that is, up-down split-screen or horizontal split-screen), and in this case, the position in which the application that needs to use the text input method is located on the screen is, for example, an upper part and a lower part. The split-screen mode may alternatively be a left-right split-screen mode (that is, left-right split-screen or vertical split-screen), and in this case, the position in which the application that needs to use the text input method is located on the screen is, for example, a right side and a left side.

For example, in an up-down split-screen scenario, if an application that needs to use the text input method is located in an upper part of the screen, that is, an upper split-screen invokes the text input method, the mobile phone 100 directly displays a text input method window in a lower part of the screen, and does not adjust a boundary (that is, does not need to adjust a split-screen line) between upper and lower split-screen applications. The text input method window at least partially shields content displayed in a split-screen window in the lower part of the screen. If the application that needs to use the text input method is located in the lower part of the screen, that is, a lower split-screen invokes the text input method, the mobile phone 100 shrinks a bottom edge of the upper split-screen and pins the lower split-screen to the top, where a height of the lower split-screen keeps unchanged when the lower split-screen is pined to the top; and displays the text input method window in the lower part of the screen.

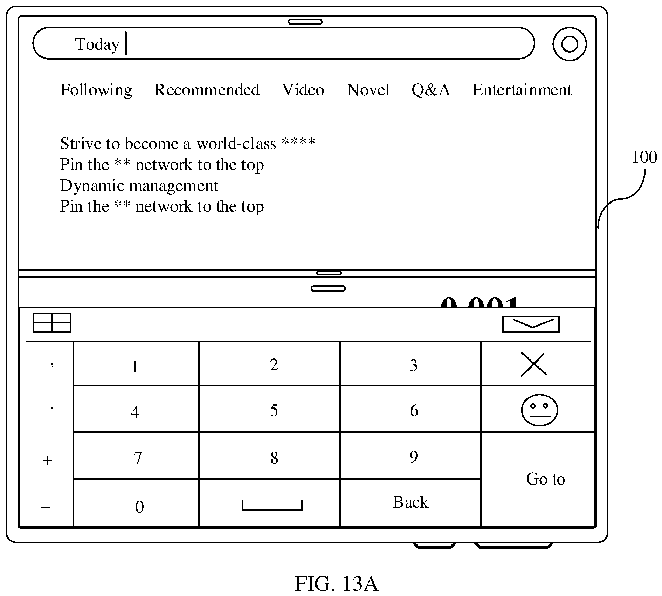

For example, as shown in FIG. 13A, the upper split-screen application is the browser application, the lower split-screen application is the calculator application, and the browser application invokes the text input method. Therefore, the mobile phone 100 directly displays the text input method window in the lower part of the screen, and does not adjust the boundary (that is, does not need to adjust the split-screen line) between the upper and lower split-screen applications. The text input method window at least partially shields the application interface of the calculator application displayed in the split-screen window in the lower part of the screen.

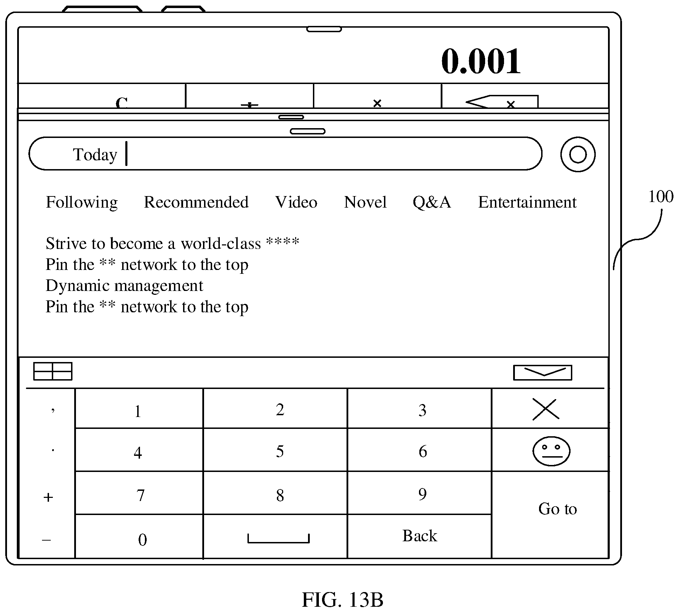

For example, as shown in FIG. 13B, the upper split-screen application is the calculator application, the lower split-screen application is the browser application, and the browser application invokes the text input method. Therefore, the mobile phone 100 shrinks a bottom edge of the upper split-screen calculator application and pins the browser application to the top (that is, needs to move the split-screen line upward), where a height of the browser application keeps unchanged when the browser application is pinned to the top; and displays the text input method window in the lower part of the screen.

Further, after a display state of the screen of the mobile phone 100 switches from an unfolded state to a folded state or from the folded state to the unfolded state, the mobile phone 100 needs to re-calculate a height of the text input method based on a new split-screen proportion, and a manner of calculating the height may be based on selecting and setting.

In this way, a use requirement of a user for the text input method in different split-screen scenarios can be met, thereby effectively improving user experience.

In an implementation of this application, the screen splitting operation of the user may be a screen splitting operation performed by the user by using the function bar S1, or may be a screen splitting operation performed by using the side toolbar, a screen splitting operation performed based on an operation of dragging a floating window displayed in a floating manner, or the like. Certainly, the screen splitting operation may alternatively be a screen splitting operation implemented based on another operation, and may be selected and set based on a requirement.

Using the mobile phone 100 as an example, the following further describes an instance of a process in which the mobile phone 100 detects a screen splitting operation of a user and performs screen splitting.

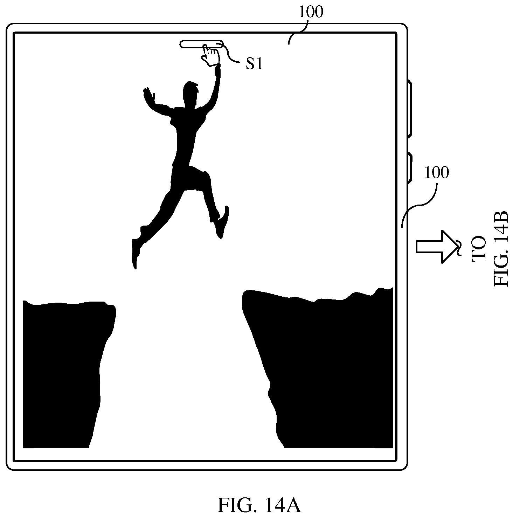

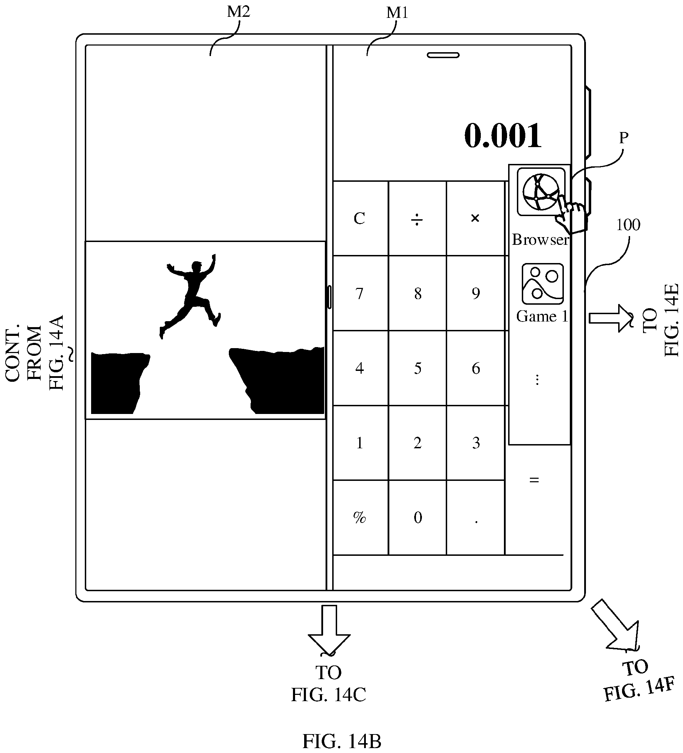

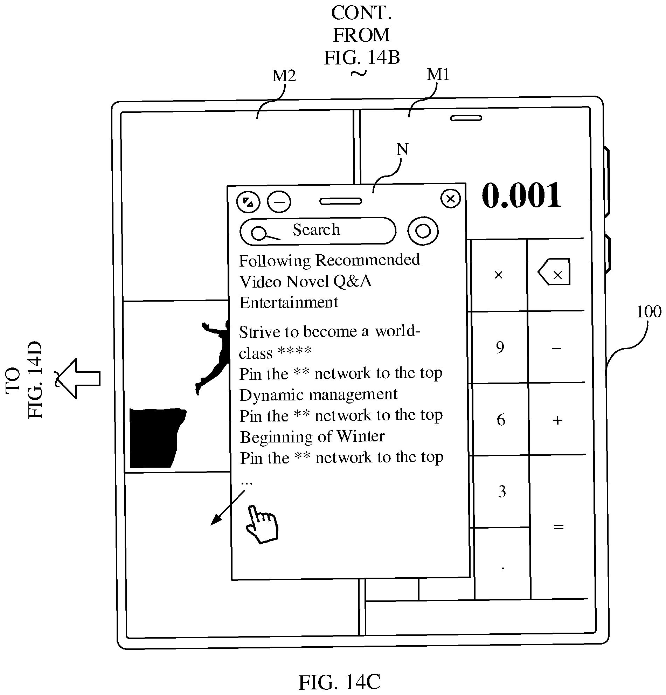

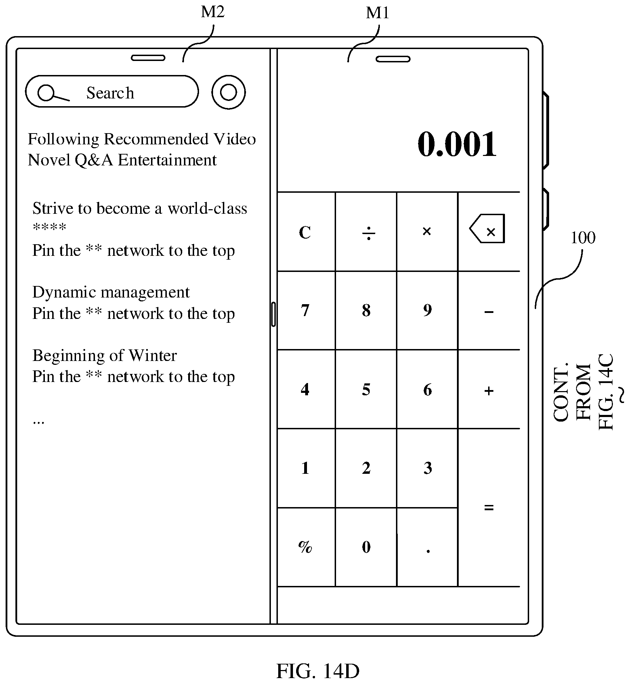

Referring to FIG. 14A, the mobile phone 100 displays the application interface of the video application, and displays the function bar S1. As described above, the user may enter a split-screen state by using the function bar S1, for example, as shown in FIG. 14B, a split-screen window M1 and a split-screen window M2 are displayed. The application interface of the calculator application is vertically displayed in the split-screen window M1 in a size that fully covers the split-screen window M1, and the application interface of the video application is horizontally displayed in the split-screen window M2 in a size that does not fully cover the split-screen window M2. If the mobile phone 100 receives an operation of sliding a screen on a right side to a left side by the user, as shown FIG. 14B, the mobile phone 100 displays a side toolbar P. The side toolbar P includes icons of a plurality of applications such as the browser application and the game application 1. As shown in FIG. 14B, if the mobile phone 100 receives a tap operation performed by the user on the browser application icon, as shown FIG. 14C, the mobile phone 100 displays, in a floating manner, an application interface N of the browser application in a current display interface. Further, as shown FIG. 14C, if the mobile phone 100 receives an operation of dragging the application interface N toward a lower left corner of the lower split-screen window M2 by the user, the mobile phone 100 uses the application interface of the browser application to replace the application interface of the video application displayed in the split-screen window M2, that is, as shown in FIG. 14D, the mobile phone 100 vertically displays the application interface of the browser application in the split-screen interface M2.

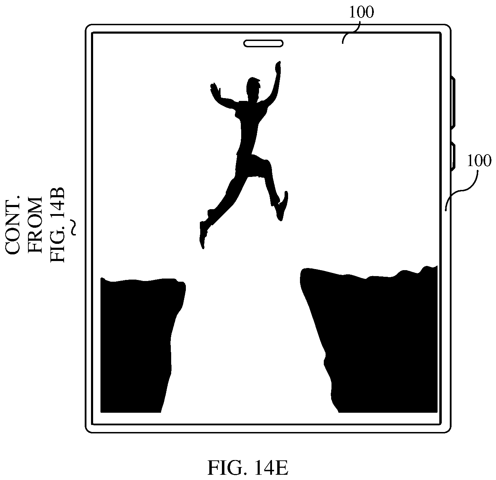

In addition, if the mobile phone 100 receives an operation of sliding, by the user, a split-screen line shown in FIG. 14B to the right, and determines that the mobile phone needs to exit the split-screen state, as shown in FIG. 14E, the mobile phone 100 displays the application interface of the video application in full screen.

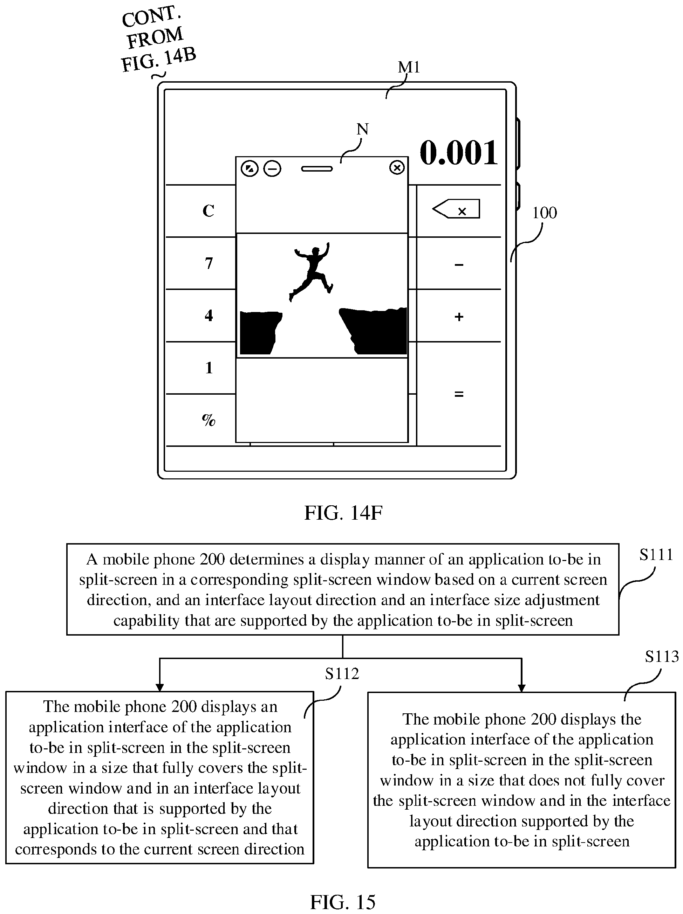

Alternatively, if the mobile phone 100 receives an operation in which the user drags the interface of the video application shown in FIG. 14B to be above the interface of the calculator application, and determines that the mobile phone needs to enter a floating window state from the split-screen state, as shown in FIG. 14F, the mobile phone 100 displays the application interface of the calculator application in full screen, and displays, in a floating manner, the application interface of the video application above the application interface of the calculator application.

In this implementation, the mobile phone 100 may add, on a basis of an original system framework, uniform management of a list related to switching between three states: a full-screen state, a split-screen state, and a floating window state. The mobile phone 100 may determine, based on the list, whether an application is an application that supports corresponding full-screen display, split-screen display, and floating window display. If the application is the application that supports corresponding full-screen display, split-screen display, and floating window display, the mobile phone 100 obtains a preset interface from the list to provide corresponding interfaces for different modules based on the list, thereby implementing mutual switching between the three states.

In this way, in a split-screen scenario, the mobile phone 100 can display an application interface of an application in a compatibility mode, implement switching between the full-screen state, the split-screen state, and the floating window state, and implement a corresponding display motion effect, to meet different use requirements of a user, thereby effectively improving user experience.

Further, for an application that is displayed in a split-screen window in a size that does not fully cover the split-screen window, in a scenario in which the application enters or exits a split-screen mode, the mobile phone 100 needs to display the application based on a new window mode/window size.

When entering the split-screen state, the application may enter the split-screen state in the full-screen state (which may be referred to as an application cold start), or may enter the split-screen state in the floating state or the split-screen state (which may also be referred to as a hot start). In addition, the application enters a split-screen (that is, the application is stated in the split-screen or switches from a full-screen/floating window to a split-screen mode). If an interface layout direction supported by the application is the same as a screen direction, the mobile phone 100 displays an application interface of the application in a split-screen window in a size that fully covers the split-screen window. If the interface layout direction supported by the application is different from the screen direction, or the like, the mobile phone 100 displays, based on the foregoing preset display proportion rule, the application interface of the application in the split-screen window in a size that does not fully cover the split-screen window.

If the mobile phone 100 determines that the application needs to exit the split-screen state, the mobile phone 100 switches to the full-screen state based on a user operation or a preset switching rule, and displays the corresponding application in full screen; or switches the application to a floating window based on a user operation or a preset display rule, and displays the application based on a size of the floating window.

The foregoing mobile phone 200 is used as an example below to further describe a process of displaying an application interface by the mobile phone 200.

With reference to FIG. 15, the following further describes a process of displaying an application interface of an application by the mobile phone 200.

S111: When the mobile phone 200 receives the foregoing screen splitting operation of the user, or detects that a screen direction of the mobile phone 200 changes in a split-screen state, the mobile phone 200 determines a display manner of an application to-be in split-screen in a corresponding split-screen window based on a current screen direction, and an interface layout direction and an interface size adjustment capability that are supported by the application to-be in split-screen; and displays, in the determined display manner, an application interface of the application to-be in split-screen in the split-screen window corresponding to the application to-be in split-screen, to display a split-screen interface.

The mobile phone 200 performs step S112 if the mobile phone 200 determines that the application to-be in split-screen supports an interface layout direction the same as the current screen direction of the mobile phone 200, or the mobile phone 200 determines that the interface layout direction supported by the application to-be in split-screen includes the interface layout direction the same as the current screen direction of the mobile phone 200, or the mobile phone 200 determines that the mobile phone 200 includes the foregoing portrait layout direction and horizontal layout direction.

The mobile phone 200 performs step S112 if the mobile phone 200 determines that the application to-be in split-screen does not support the interface layout direction the same as the current screen direction of the mobile phone 200, or the mobile phone 200 determines that the interface layout direction supported by the application to-be in split-screen is different from the current screen direction of the mobile phone 200, but the interface size adjustment capability of the application to-be in split-screen is that a size is adjustable.

The mobile phone 200 performs step S113 if the mobile phone 200 determines that the application to-be in split-screen does not support the interface layout direction the same as the screen direction of the mobile phone 200, or the mobile phone 200 determines that the interface layout direction supported by the application to-be in split-screen is different from the current screen direction of the mobile phone 200, and the interface size adjustment capability of the application to-be in split-screen is that a size is unadjustable.

S112: The mobile phone 200 displays the application interface of the application to-be in split-screen in the split-screen window in a size that fully covers the split-screen window and in an interface layout direction that is supported by the application to-be in split-screen and that is the same as the current screen direction.

S113: The mobile phone 200 displays the application interface of the application to-be in split-screen in the split-screen window in a size that does not fully cover the split-screen window and in the interface layout direction (that is, an interface layout direction that is different from the current screen direction) supported by the application to-be in split-screen.

In this way, the mobile phone 200 can conveniently determine a display manner of displaying an application interface of an application to-be in split-screen in a split-screen window, and display the application interface in the display manner, to meet a requirement for normally displaying the application interface and ensure a use requirement of a user, thereby effectively improving user experience.

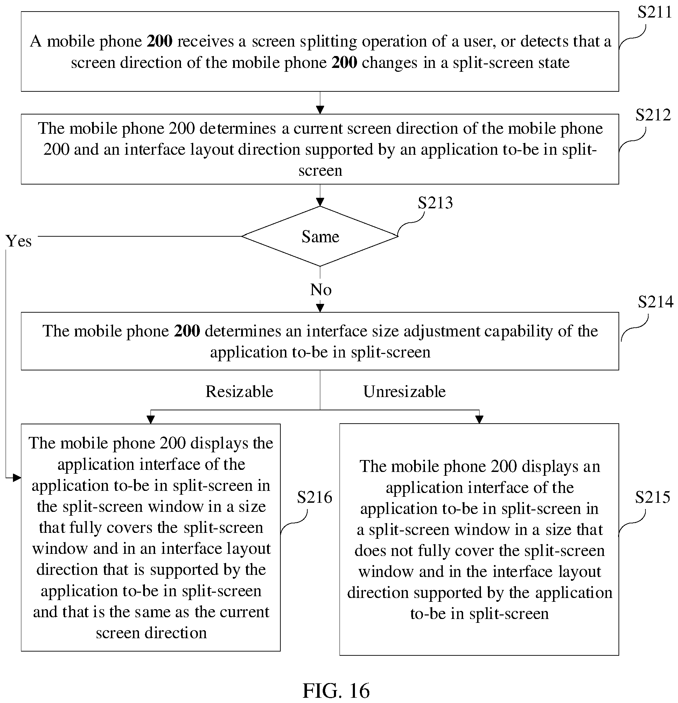

With reference to FIG. 16, the following further describes a process of displaying an application interface by the mobile phone 200.

S211: When receiving the foregoing screen splitting operation of the user or detecting that a screen direction of the mobile phone 200 changes in a split-screen state, the mobile phone 200 determines an application that needs to be in split-screen.

S212: The mobile phone 200 determines a current screen direction of the mobile phone 200 and an interface layout direction supported by the application to-be in split-screen.

The screen direction includes the foregoing portrait direction and landscape direction, and the interface layout direction includes the foregoing portrait layout direction and landscape layout direction.

S213: The mobile phone 200 determines whether the current screen direction of the mobile phone 200 is the same as the interface layout direction supported by the application to-be in split-screen. If the current screen direction is different from the interface layout direction, the mobile phone 200 performs step S214; or if the current screen direction is the same as the interface layout direction, the mobile phone 200 performs step S216.

S214: The mobile phone 200 determines an interface size adjustment capability of the application to-be in split-screen, where the interface size adjustment capability includes that a size is adjustable and that a size is unadjustable. If the mobile phone 200 determines that the interface size adjustment capability of the application is that a size is unadjustable, the mobile phone 200 performs step S215; or if the mobile phone 200 determines that the interface size adjustment capability of the application that a size is adjustable, the mobile phone 200 performs step S216.

S215: The mobile phone 200 displays an application interface of the application to-be in split-screen in a split-screen window in a size that does not fully cover the split-screen window and in the interface layout direction supported by the application to-be in split-screen.

S216: The mobile phone 200 displays the application interface of the application to-be in split-screen in the split-screen window in a size that fully covers the split-screen window and in an interface layout direction that is supported by the application to-be in split-screen and that is the same as the current screen direction.

In this way, the mobile phone 200 can conveniently determine a display manner of displaying an application interface of an application to-be in split-screen in a split-screen window, to meet a requirement for normally displaying the application interface, thereby effectively improving user experience.

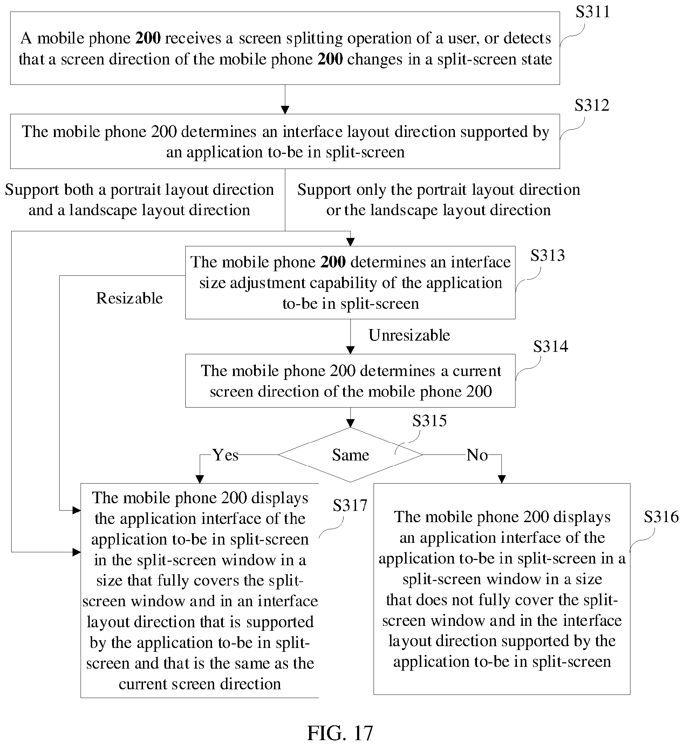

With reference to FIG. 17, the following further describes a process of displaying an application interface by the mobile phone 200.

S311: The mobile phone 200 receives the foregoing screen splitting operation of the user, or detects that a screen direction of the mobile phone 200 changes in a split-screen state.

S312: The mobile phone 200 determines an interface layout direction supported by an application to-be in split-screen. If the interface layout direction supported by the application to-be in split-screen includes the foregoing portrait layout direction and landscape layout direction, the mobile phone 200 performs step S317; or if the interface layout direction supported by the application to-be in split-screen includes only the foregoing portrait layout direction or landscape layout direction, the mobile phone 200 performs step S313.

S313: The mobile phone 200 determines an interface size adjustment capability of the application to-be in split-screen, where the interface size adjustment capability includes that a size is adjustable and that a size is unadjustable. If the mobile phone 200 determines that the interface size adjustment capability of the application to-be in split-screen is that a size is unadjustable, the mobile phone 200 performs step S314; or if the mobile phone 200 determines that the interface size adjustment capability of the application to-be in split-screen is that a size is adjustable, the mobile phone 200 performs step S317.

S314: The mobile phone 200 determines a current screen direction of the mobile phone 200.

S315: The mobile phone 200 determines whether the current screen direction of the mobile phone 200 is the same as the interface layout direction supported by the application to-be in split-screen. If the current screen direction is different from the interface layout direction, the mobile phone 200 performs step S316; or if the current screen direction is the same as the interface layout direction, the mobile phone 200 performs step S317.

S316: The mobile phone 200 displays an application interface of the application to-be in split-screen in a split-screen window in a size that does not fully cover the split-screen window and in the interface layout direction supported by the application to-be in split-screen.

S317: The mobile phone 200 displays the application interface of the application to-be in split-screen in the split-screen window in a size that fully covers the split-screen window and in an interface layout direction that is supported by the application to-be in split-screen and that is the same as the current screen direction.

In this way, the mobile phone 200 can conveniently determine a display manner of displaying an application interface of an application to-be in split-screen in a split-screen window, and display the application interface in the display manner, to meet a requirement for normally displaying the application interface and ensure a use requirement of a user, thereby effectively improving user experience.

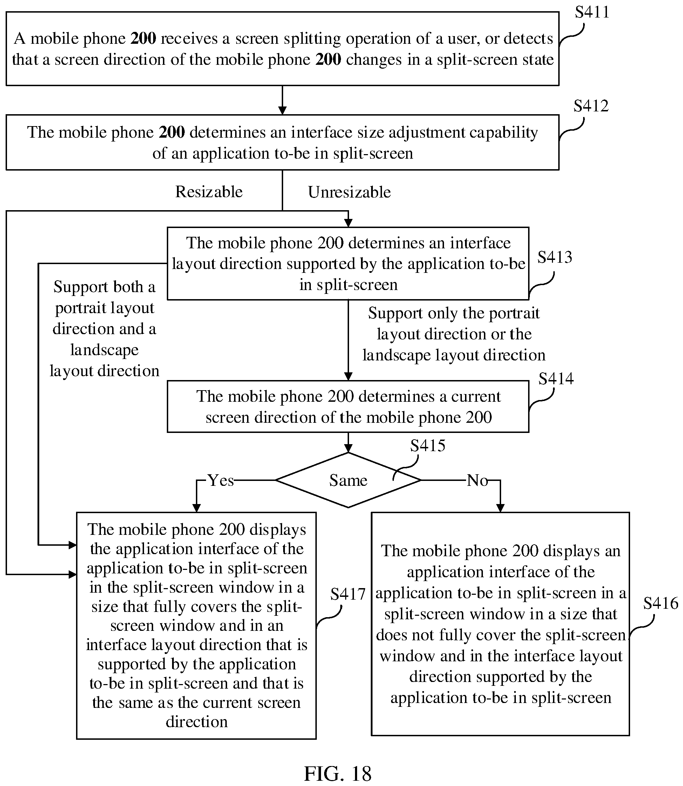

With reference to FIG. 18, the following further describes a process of displaying an application interface by the mobile phone 200.

S411: The mobile phone 200 receives the foregoing screen splitting operation of the user, or detects that a screen direction of the mobile phone 200 changes in a split-screen state.

S412: The mobile phone 200 determines an interface size adjustment capability of an application to-be in split-screen, where the interface size adjustment capability includes that a size is adjustable and that a size is unadjustable. If the mobile phone 200 determines that the interface size adjustment capability of the application to-be in split-screen is that a size is unadjustable, the mobile phone 200 performs step S413; or if the mobile phone 200 determines that the interface size adjustment capability of the application to-be in split-screen is that a size is adjustable, the mobile phone 200 performs step S417.

S413: The mobile phone 200 determines an interface layout direction supported by the application to-be in split-screen. If the interface layout direction supported by the application to-be in split-screen includes the foregoing portrait layout direction and landscape layout direction, the mobile phone 200 performs step S417; or if the interface layout direction supported by the application to-be in split-screen includes only the foregoing portrait layout direction or landscape layout direction, the mobile phone 200 performs step S414.

S414: The mobile phone 200 determines a current screen direction of the mobile phone 200.

S415: The mobile phone 200 determines whether the current screen direction of the mobile phone 200 is the same as the interface layout direction supported by the application to-be in split-screen. If the current screen direction is different from the interface layout direction, the mobile phone 200 performs step S416; or if the current screen direction is the same as the interface layout direction, the mobile phone 200 performs step S417.

S416: The mobile phone 200 displays an application interface of the application to-be in split-screen in a split-screen window in a size that does not fully cover the split-screen window and in the interface layout direction supported by the application to-be in split-screen.

S417: The mobile phone 200 displays the application interface of the application to-be in split-screen in the split-screen window in a size that fully covers the split-screen window and in an interface layout direction that is supported by the application to-be in split-screen and that is the same as the current screen direction.

In this way, the mobile phone 200 can conveniently determine a display manner of displaying an application interface of an application to-be in split-screen in a split-screen window, and display the application interface in the display manner, to meet a requirement for normally displaying the application interface and ensure a use requirement of a user, thereby effectively improving user experience.

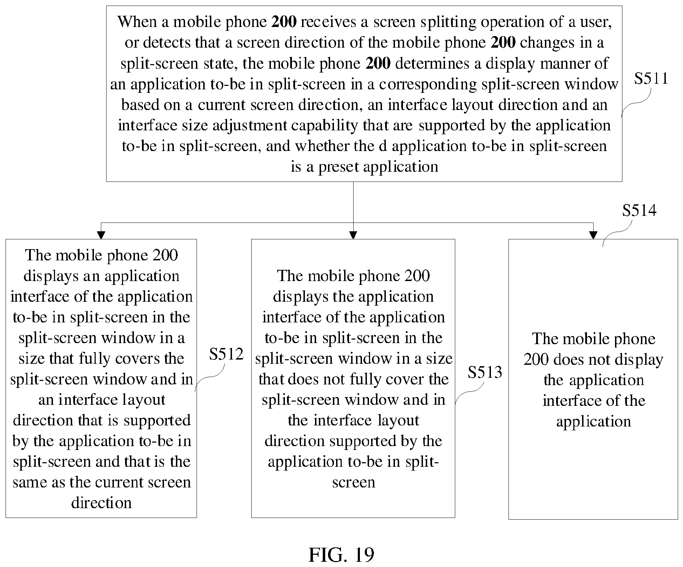

With reference to FIG. 19, the following further describes a process of displaying an application interface by the mobile phone 200.

S511: When the mobile phone 200 receives the foregoing screen splitting operation of the user, or detects that a screen direction of the mobile phone 200 changes in a split-screen state, the mobile phone 200 determines a display manner of an application to-be in split-screen in a corresponding split-screen window based on a current screen direction, an interface layout direction supported by the application to-be in split-screen, an interface size adjustment capability of the application to-be in split-screen, and whether the application to-be in split-screen is a preset application; and displays, in the determined display manner, an application interface of the application to-be in split-screen in the split-screen window corresponding to the application to-be in split-screen, to display a split-screen interface.

The mobile phone 200 performs step S512 if the mobile phone 200 determines that the application to-be in split-screen supports an interface layout direction the same as the current screen direction of the mobile phone 200, or the mobile phone 200 determines that the interface layout direction supported by the application to-be in split-screen includes the interface layout direction the same as the current screen direction of the mobile phone 200, or the mobile phone 200 determines that the mobile phone 200 includes the foregoing portrait layout direction and horizontal layout direction.

The mobile phone 200 performs step S512 if the mobile phone 200 determines that the application to-be in split-screen does not support the interface layout direction the same as the current screen direction of the mobile phone 200, or the mobile phone 200 determines that the interface layout direction supported by the application to-be in split-screen is different from the current screen direction of the mobile phone 200, but the application to-be in split-screen is the preset application, and the interface size adjustment capability of the application to-be in split-screen is that a size is adjustable.

The mobile phone 200 performs step S513 if the mobile phone 200 determines that the application to-be in split-screen does not support the interface layout direction the same as the screen direction of the mobile phone 200, or the mobile phone 200 determines that the interface layout direction supported by the application to-be in split-screen is different from the current screen direction of the mobile phone 200, but the application to-be in split-screen is the preset application, and the interface size adjustment capability of the application is that a size is unadjustable.

The mobile phone 200 performs step S514 if the mobile phone 200 determines that the application to-be in split-screen does not support the interface layout direction the same as the screen direction of the mobile phone 200, or the mobile phone 200 determines that the interface layout direction supported by the application to-be in split-screen is different from the current screen direction of the mobile phone 200, and the application to-be in split-screen is not the preset application.

S512: The mobile phone 200 displays the application interface of the application to-be in split-screen in the split-screen window in a size that fully covers the split-screen window and in an interface layout direction that is supported by the application to-be in split-screen and that is the same as the current screen direction.

S513: The mobile phone 200 displays the application interface of the application to-be in split-screen in the split-screen window in a size that does not fully cover the split-screen window and in the interface layout direction supported by the application to-be in split-screen.

S514: The mobile phone 200 does not perform split screen processing on the application, that is, does not display the application interface of the application to-be in split-screen in the split-screen window.

In this way, the mobile phone 200 can conveniently determine a display manner of displaying an application interface of an application to-be in split-screen in a split-screen window, and display the application interface in the display manner, to meet a requirement for normally displaying the application interface and ensure a use requirement of a user, thereby effectively improving user experience.

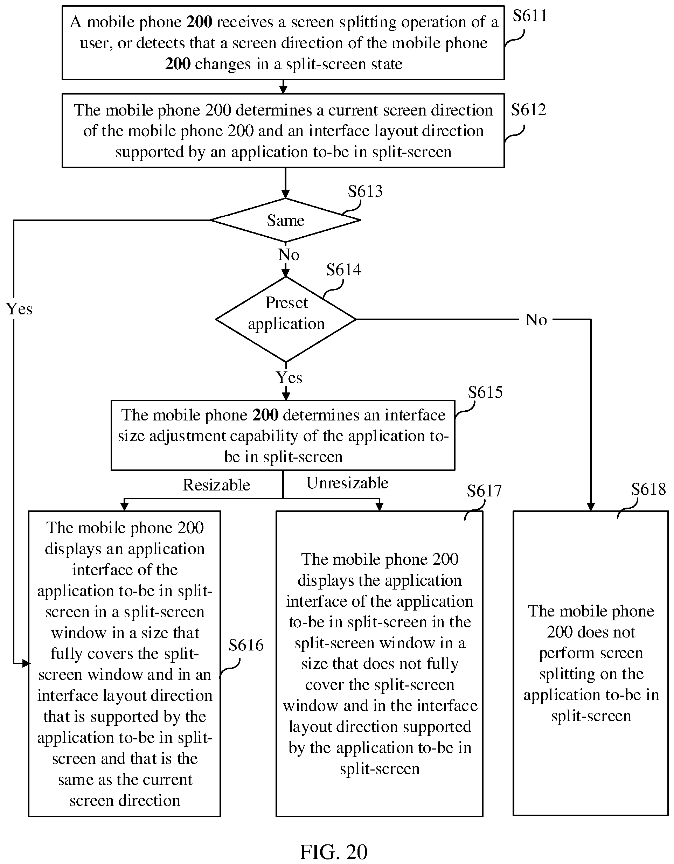

With reference to FIG. 20, the following further describes a process of displaying an application interface by the mobile phone 200.

S611: The mobile phone 200 receives the foregoing screen splitting operation of the user, or detects that a screen direction of the mobile phone 200 changes in a split-screen state.

S612: The mobile phone 200 determines a current screen direction of the mobile phone 200 and an interface layout direction supported by an application to-be in split-screen.

The screen direction includes the foregoing portrait direction and landscape direction, and the interface layout direction includes the foregoing portrait layout direction and landscape layout direction.

S613: The mobile phone 200 determines whether the current screen direction of the mobile phone 200 is the same as the interface layout direction supported by the application to-be in split-screen. If the current screen direction is different from the interface layout direction, the mobile phone 200 performs step S614; or if the current screen direction is the same as the interface layout direction, the mobile phone 200 performs step S616.

S614: The mobile phone 200 determines whether the application to-be in split-screen is a preset application. If the application to-be in split-screen is the preset application, the mobile phone 200 performs step S615; or if the application to-be in split-screen is not the preset application, the mobile phone 200 performs step S618.

The mobile phone 200 may determine, in the foregoing manner of determining whether the application to-be in split-screen is an application in a whitelist, whether the application to-be in split-screen is the preset application.

S615: The mobile phone 200 determines an interface size adjustment capability of the application to-be in split-screen, where the interface size adjustment capability includes that a size is adjustable and that a size is unadjustable. If the mobile phone 200 determines that the interface size adjustment capability of the application to-be in split-screen is that a size is unadjustable, the mobile phone 200 performs step S617; or if the mobile phone 200 determines that the interface size adjustment capability of the application to-be in split-screen is that a size is adjustable, the mobile phone 200 performs step S616.

S616: The mobile phone 200 displays an application interface of the application to-be in split-screen in a split-screen window in a size that does not fully cover the split-screen window and in an interface layout direction that is supported by the application to-be in split-screen and that is the same as the current screen direction.

S617: The mobile phone 200 displays the application interface of the application to-be in split-screen in the split-screen window in a size that fully covers the split-screen window and in the interface layout direction supported by the application to-be in split-screen.

S618: The mobile phone 200 does not perform split screen processing on the application, that is, does not display the application interface of the application to-be in split-screen in the split-screen window.

In this way, the mobile phone 200 can conveniently determine a display manner of displaying an application interface of an application to-be in split-screen in a split-screen window, and display the application interface in the display manner, to meet a requirement for normally displaying the application interface and ensure a use requirement of a user, thereby effectively improving user experience.

In addition, corresponding to the foregoing FIG. 17, before performing step S314, the mobile phone 200 may also determine that the application is the preset application, and perform subsequent processing based on the result. In addition, corresponding to the foregoing FIG. 18, before performing step S414, the mobile phone 200 may also determine that the application is the preset application, and perform subsequent processing based on the result. For the process, refer to related steps in FIG. 20. Details are not described herein again.

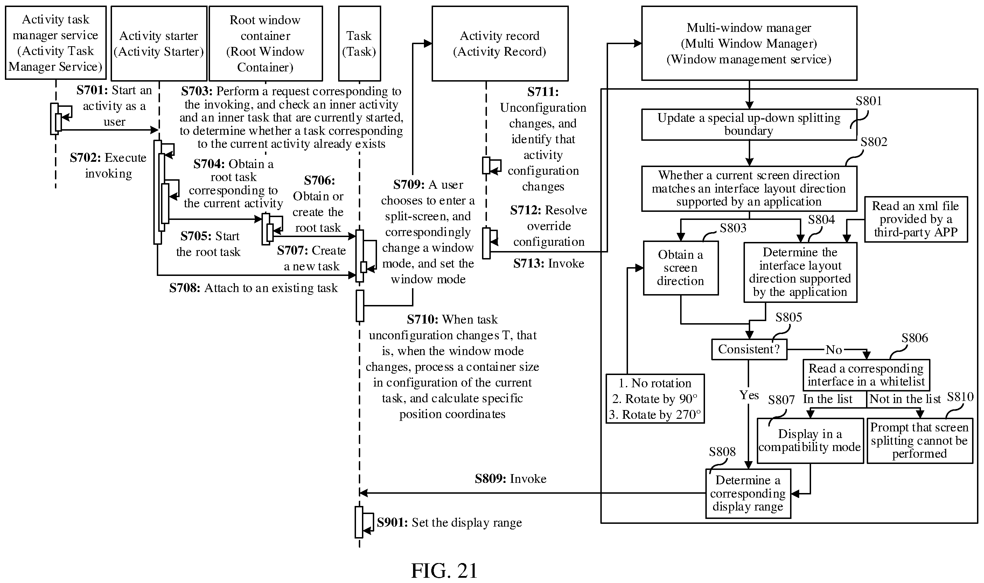

Further, with reference to FIG. 21, the following further describes a process of displaying an application interface by the mobile phone 200.

In an implementation of this application, the mobile phone 200 mainly displays an application interface by using a home screen launcher, an activity management service, a window management service, a function bar, animation management, and the like that are in the mobile phone 200. Referring to FIG. 21, the home screen launcher includes an activity task manager service (Activity Task Manager Service) module, the activity management service includes an activity starting (Activity Starter) module and an activity recording (Activity Record) module, and the window management service includes a task ((Task)) module and a window management service module. The activity starting module can interact with the task module through a root window container (Root Window Container).

Therefore, an implementation process of the method includes the following steps:

S701: If the activity task manager service module determines, based on an operation of enabling an application by a user, a screen splitting operation performed by the user on an interface (the screen splitting operation may be implemented based on an operation performed by the user on the foregoing function bar), or another operation, that the activity task manager service module needs to start a corresponding activity as a user (that is, this may be understood as "Start Activity As User"), the activity task manager service module performs S702.

S702: The activity task manager service module executes (execute) an operation of invoking the activity starting (Activity Starter) module.

S703: The activity starting module performs, based on the invoking of the activity task manager service module, a request corresponding to the invoking, and checks an inner activity and an inner task that are currently started, to determine whether a task corresponding to the current activity already exists (that is, this may be understood as "Execute Request start Activity Unchecked start Activity Inner").

The activity starting module performs S704 if the activity starting module determines that a root task corresponding to the current activity does not exist currently (for example, if a user operation is an operation of enabling a new application, it is determined that the root task corresponding to the activity does not exist currently; or a task that has application identification information or the like the same as that of the current activity does not exist in a currently started task). The activity starting module performs S708 if the activity starting module determines that the root task corresponding to the current activity currently exists (for example, if a user operation is a screen splitting operation, and the application has been started, it is determined that the root task corresponding to the activity currently exists; or a task that has application identification information or the like the same as that of the current activity exists in the currently started task).

S704: The activity starting module determines that the root task corresponding to the current activity needs to be obtained (that is, this may be understood as "Computer target Task get Launch Root Task").

S705: The activity starting module sends, to a root window container, an instruction for starting a root task (that is, this may be understood as "get Launch Root Task").

S706: The root window container determines, based on the instruction sent by the activity starting module, that the root task corresponding to the current activity needs to be obtained or created (that is, this may be understood as "get Or Create Root Task").

S707: The root window container sends, to the task module, an instruction for creating a new task, so that the task module creates a new task, and attaches the current activity to the new task.

S708: The activity starting module sends an instruction to the task module, to attach the activity to a corresponding existing task.

Attaching an activity to a corresponding task means associating identification information corresponding to the activity with identification information of the corresponding task. For example, the identification information of the task is used as a parent node, and the identification information of the activity is added to the identification information of the task as a child node of the identification information of the activity, to associate the two pieces of identification information.

S709: If the task module determines that a new activity is an activity that the user chooses to enter a split-screen, the task module determines that a window mode (Window Mode) needs to be correspondingly changed, that is, a new window mode needs to be set.

The window mode includes three types: full (full)-screen, split (split)-screen, and floating (freeform). The window mode may be determined based on a pre-stored window mode configuration file, and information such as a corresponding container size may be further determined.

S710: When a task unconfiguration item of the task module changes (that is, Task Unconfiguration changed), that is, when the window mode changes, the task module determines that a container size (that is, a size of a split-screen window) in configuration (configuration) of the current task needs to be processed and specific position coordinates of an application interface in the split-screen window need to be calculated, and invokes the activity recording module.

S711: An unconfiguration item of the activity recording module changes, and the activity recording module identifies that activity configuration changes.

S712: The activity recording module determines that display of an application interface corresponding to the configuration needs to be resolved (that is, this may be understood as "Resolved Override Configuration").

S713: The activity recording module invokes the window management service module in a window management service in a multi-window manager (Multi Window Manager), so that the window management service module performs the following steps.

S801: The window management service module determines a split-screen mode, determines a position of a split-screen line, and updates, by using the split-screen line, a screen splitting boundary corresponding to the current split-screen mode, for example, an up-down splitting boundary, that is, updates a special up-down splitting boundary.

S802: The window management service module determines whether a current screen direction matches, that is, is the same as or is consistent with, an interface layout direction supported by an application needs to be determined.

S803: The window management service module obtains a screen direction.

The screen direction includes a portrait direction (that is, an original direction or a specified physical direction used when the mobile phone 200 is not rotated) and a landscape direction (for example, a direction obtained after the mobile phone 200 is rotated by 90 degrees or 270 degrees on the basis of the original direction or the specified physical direction) of the mobile phone 200.

S804: The window management service module determines an interface layout direction supported by an application.

For example, the window management service module may obtain, from an xml file provided by a third-party application, an interface layout direction declared by the third-party application.

S805: The window management service module determines whether the current screen direction is consistent with the interface layout direction supported by the application. If the current screen direction is inconsistent with the interface layout direction supported by the application, the window management service module performs step S806. If the current screen direction is consistent with the interface layout direction supported by the application, the window management service module performs step S808.

S806: The window management service module reads a corresponding preset whitelist to determine whether the application is a preset application in the whitelist, that is, whether the application is in the whitelist. If the application is in the whitelist, the window management service module performs step S807. If the application is not in the whitelist, the window management service module performs step S810.

S807: The window management service module displays an application interface, for example, in a compatibility mode.

S808: The window management service module determines a display range of the application in a split-screen window, that is, determines a corresponding display position.

S809: The window management service module invokes the task module, so that the task module performs, based on the determined display range information (that is, display position information), an operation related to display of the application interface.

S810: The window management service module does not perform a screen splitting operation, so that a display screen of the mobile phone 100 displays the prompt information shown in FIG. 11B, to prompt that a current application does not support split-screen.

In addition, the method further includes S901, to be specific, the task module performs, based on display position information (that is, display range (bounds) information), an operation related to display of an application interface, for example, setting a display range. The task module may determine a corresponding container size based on a configuration file of a preset container size (for example, position information such as diagonal coordinates of a container), and may display the application interface in a corresponding container based on the display range of the application interface. In addition, a motion effect in a split-screen display process may be implemented by the foregoing motion effect service. For an implementation process of the motion effect, refer to the current implementation. Details are not described herein again.

In this way, the mobile phone 200 can conveniently determine a display manner of displaying an application interface of an application to-be in split-screen in a split-screen window, and display the application interface in the display manner, to meet a requirement for normally displaying the application interface and ensure a use requirement of a user, thereby effectively improving user experience.

Further, in this implementation, for step S808, that the window management service module determines a display range of the application in a split-screen window may be that the mobile phone 200 may, for example, obtain, from a declaration file in an application package of the application, information such as an interface layout direction and an interface size adjustment capability that are supported by the application. In addition, the mobile phone 200 may, for example, obtain, from the declaration file in the application package of the application, a display size used when the preset application is displayed in a size that does not fully cover the split-screen window. Alternatively, the mobile phone 200 may determine the display size of the application by using a preset application whitelist.

The display size may be any one of the foregoing first size, second size, and third size. The first size is a size obtained after the application interface of the application is scaled down based on a preset proportion, the second size is a size that corresponds to the first size and whose aspect ratio is 4:3, and the third size is a size that corresponds to the first size and whose aspect ratio is 16:9. The first size, the second size, the third size, and the preset proportion all may be specifically set based on a requirement.

The following describes an instance of setting the first size, the second size, the third size, and the preset proportion.

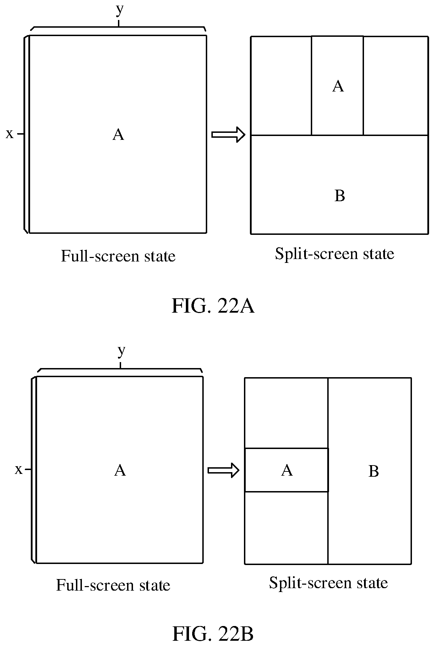

Referring to FIG. 22A, in a landscape state, a foldable-screen mobile phone enters a split-screen state from a full-screen state, and enters a compatibility mode. When the foldable-screen mobile phone is in the full-screen state, an interface size of an application A is as follows: a height is x, and a width is y. Therefore, in the split-screen state, an interface size of the application A displayed in a size that does not fully cover a split-screen window is as follows:

If the application A is displayed in a 0:0 size, a height=(x-dividerbar)/2, and a width=(x-dividerbar)*(x-dividerbar)/(4*y).

If the application A is displayed in a 4:3 size, a height=(x-dividerbar)/2, and a width=(x-dividerbar)/2*3/4.

If the application A is displayed in a 16:9 size, a height=(x-dividerbar)/2, and a width=(x-dividerbar)/2*9/16.

A value of x may be, for example, 1900-2000 mm, and may be, for example, 1984 mm. A value of y may be, for example, 2000~2500 mm, and may be, for example, 2272 mm.

In addition, the dividerbar is a width of a split-screen line. A value of the dividerbar may be, for example, 10-15 mm, and may be, for example, 12 mm.

Certainly, values of x, y, and the dividerbar may alternatively be any other values, and may be set based on a requirement.

Subsequently, the mobile phone 200 may display an application interface of an application in a center of a corresponding container based on a container position of a task (that is, a position of a split-screen window).

Referring to FIG. 22B, in a portrait state, the mobile phone 200 enters a split-screen state from a full-screen state, and enters a compatibility mode. When the mobile phone 100 is in the full-screen state, an interface size of an application A is as follows: a height is x, and a width is y. Therefore, in the split-screen state, an interface size of the application A displayed in a size that does not fully cover a split-screen window is as follows:

If the application A is displayed in a 0:0 size, a width=(y-dividerbar)/2, and a height=(y-dividerbar)*(y-dividerbar)/(4*x).

If the application A is displayed in a 4:3 size, a width=(y-dividerbar)/2, and a height=(y-dividerbar)/2*3/4.

If the application A is displayed in a 16:9 size, a width=(y-dividerbar)/2, and a height=(y-dividerbar)/2*9/16.

A value of x is, for example, 2000~2500 mm, and may be, for example, 2272 mm. A value of y may be, for example, 1900-2000 mm, and may be, for example, 1984 mm.

In addition, the dividerbar is a width of a split-screen line. A value of the dividerbar may be, for example, 10-15 mm, and may be, for example, 12 mm.

Certainly, values of x, y, and the dividerbar may alternatively be any other values, and may be set based on a requirement.

Subsequently, the mobile phone 200 may display an application interface of an application in a center of a corresponding container based on a container position of a task (that is, a position of a split-screen window).

In this way, in the compatibility mode, the mobile phone 200 can display a corresponding application interface based on the foregoing three different display sizes (that is, size display modes), to meet different use requirements of a user for an application.

Certainly, in some other implementations of this application, a display size of an application interface in a split-screen window may alternatively be determined in another manner.

In addition, in this implementation, the mobile phone 200 may also determine a screen direction of the mobile phone 200 based on movement information of the mobile phone 200 detected by a gyroscope sensor 180B in the mobile phone 200.

In addition, the foregoing whitelist used to determine whether an application is a preset application may be stored in a storage area corresponding to a window management service in the mobile phone 200, or may be stored in another storage area. This may be set based on a requirement.

Moreover, the height and the width (that is, x and y) in the foregoing interface size of the application A may be determined based on a pre-stored size of a display screen and the screen direction, and a size of the dividerbar may also be determined based on a dividerbar configuration file in a preset split-screen mode.

In some other implementations of this application, the electronic device provided in this application may alternatively be an in-vehicle device, a notebook computer, a palmtop computer, a mobile internet device (mobile internet device, MID), a wearable device (for example, including a smartwatch, a smart band, or a pedometer), a personal digital assistant, a portable media player, a navigation device, a video game device, a set-top box, a television, a sound box, a virtual reality device and/or an augmented reality device, an Internet of Things device, an industrial control device, a streaming media client device, an eBook, a reading device, a POS machine, and another device.

The application interface display method provided in the implementations of this application may be applied to electronic devices in a plurality of application scenarios such as home, office, social interaction, sports and health, and vehicles.

The following describes some other possible structures of the electronic device provided in the implementations of this application.

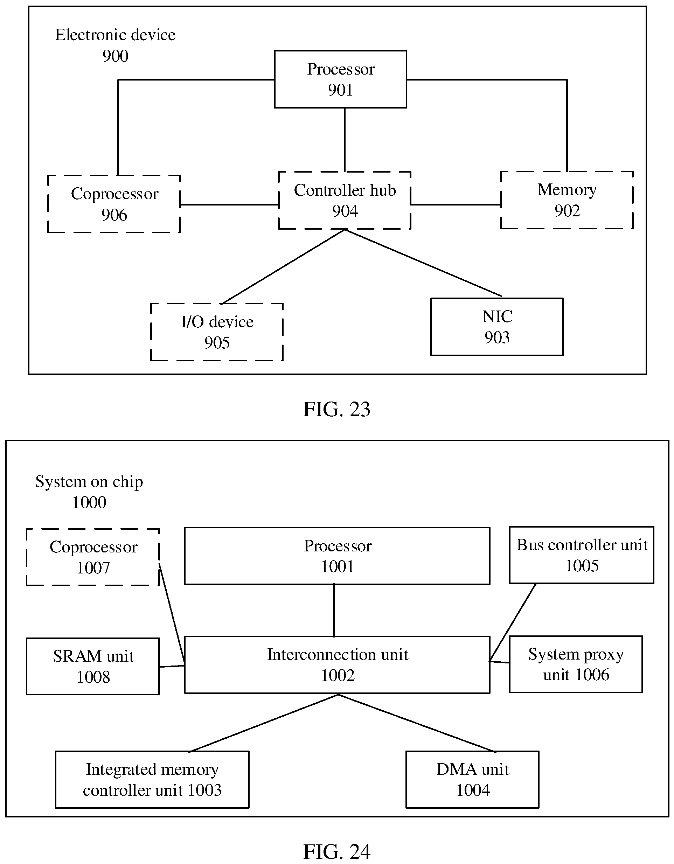

Referring to FIG. 23, FIG. 23 is a schematic diagram of a structure of an electronic device 900 according to an implementation of this application. The electronic device 900 may include one or more processors 901 coupled to a controller hub 904, and the processor 901 includes a GPU. In at least one implementation, the controller hub 904 communicates with the processor 901 by using a multi-branch bus such as a front side bus (Front Side Bus, FSB), or a point-to-point interface such as QuickPath interconnect (QuickPath Interconnect, QPI) or a similar connection. The processor 901 executes instructions for controlling a data processing operation of a general type. In an implementation, the controller hub 904 includes but is not limited to a graphics memory controller hub (Graphics Memory controller hub, GMCH) (not shown in the figure) and an input/output hub (IOH) (which may be on separate chips) (not shown in the figure). The GMCH includes a memory and a graphics controller and is coupled to the IOH.

The electronic device 900 may further include a coprocessor 906 and a memory 902 that are coupled to the controller hub 904. Alternatively, one or both of the memory 902 and the GMCH may be integrated into the processor 901 (as described in this application), the memory 902 and the coprocessor 906 are directly coupled to the processor 901 and the controller hub 904, and the controller hub 904 and the IOH are located in a single chip.

The memory 902 may be, for example, a dynamic random access memory (Dynamic Random Access Memory, DRAM), a phase change memory (Phase Change Memory, PCM), or a combination of the two.

In an implementation, the coprocessor 906 is a dedicated processor, such as a high-throughput many integrated core (Many Integrated Core, MIC) processor, a network or a communication processor, a compression engine, a graphics processing unit, a general purpose graphics processing unit (General Purpose Graphics Processing Units, GPGPU), or an embedded processor. An optional property of the coprocessor 906 is represented by a dashed line in FIG. 23.

In an implementation, the electronic device 900 may further include a network interface card (Network Interface Card, NIC) 903. The network interface card 903 may include a transceiver, configured to provide a radio interface for the electronic device 900 to communicate with any other suitable device (such as a front side module or an antenna). In various implementations, the network interface card 903 may be integrated with another component of the electronic device 900. The network interface card 903 may implement a function of a communication unit in the foregoing implementation.

The electronic device 900 may further include an input/output (I/O) device 905. The input/output (I/O) device 905 may include a user interface, and the design enables a user to interact with the electronic device 900. Design of a peripheral component interface enables a peripheral component to interact with the electronic device 900, and/or design of a sensor is used to determine an environmental condition and/or path information related to the electronic device 900.

It should be noted that FIG. 23 is merely an example. In other words, although FIG. 23 shows that the electronic device 900 includes a plurality of components such as the processor 901, the controller hub 904, and the memory 902, in actual application, a device that uses the methods in this application may include only a part of the components of the electronic device 900, for example, may include only the processor 901 and the NIC 903. A property of an optional component is represented by a dashed line in FIG. 23.

The memory of the electronic device 900 may include one or more tangible and non-temporary computer-readable media configured to store data and/or instructions. The computer-readable storage medium stores instructions, and specifically stores temporary and permanent copies of the instructions.

In this application, the electronic device 900 may be specifically a terminal device such as a mobile phone, a tablet computer, a personal digital assistant (Personal Digital Assistant, PDA), or a home screen computer. The instructions stored in the memory of the electronic device may include an instruction that causes, when being executed by at least one unit in the processor, the electronic device to implement the application interface display method mentioned above.

Referring to FIG. 24, FIG. 24 is a schematic diagram of a structure of an SoC (System on Chip, system on chip) 1000 according to an implementation of this application. In FIG. 24, similar components have a same reference numeral. In addition, a dashed-line box is an optional feature of a more advanced SoC 1000. The SoC 1000 may be used in any electronic device according to this application, and corresponding functions may be implemented based on different devices in which the SoC is located and different instructions stored in the SoC.

In FIG. 24, the SoC 1000 includes: an interconnection unit 1002, coupled to a processor 1001; a system proxy unit 1006; a bus controller unit 1005; an integrated memory controller unit 1003; a group of or one or more coprocessors 1007, where the coprocessor may include integrated graphics logic, an image processor, an audio processor, and a video processor; a static random access memory (Static Random Access Memory, SRAM) unit 1008; and a direct memory access (Direct Memory Access, DMA) unit 1004. In an implementation, the coprocessor 1007 includes a dedicated processor, such as a network or communication processor, a compression engine, a GPU, a high-throughput MIC processor, or an embedded processor.

The SRAM unit 1008 may include one or more computer-readable media configured to store data and/or instructions. The computer-readable storage medium may store instructions, and specifically store temporary and permanent copies of the instructions. The instructions may include an instruction that causes, when being executed by at least one unit in the processor 1001, the electronic device to implement the application interface display method mentioned above.

The foregoing terms "first", "second", and the like are merely used for the purpose of distinguishing description, and should not be understood as indicating or implying relative importance.

In the accompanying drawings, some structure or method features may be shown in a particular arrangement and/or order. However, it should be understood that such particular arrangement and/or sorting may not be required. Instead, in some implementations, these features may be arranged in a manner and/or order different from that shown in the illustrative accompanying drawings. In addition, inclusion of the structure or method features in a particular figure does not imply that all implementations need to include the features. In some implementations, these features may not be included, or may be combined with other features.

Although this application has been illustrated and described with reference to some implementations of this application, a person of ordinary skill in the art should understand that the foregoing content is further detailed description of this application made with reference to specific implementations, and specific implementation of this application is not limited to these descriptions. A person skilled in the art may make various modifications to forms and details, including making several simple derivations or replacements, without departing from the spirit and scope of this application.

## Claims

1. An application interface display method, applied to an electronic device, wherein the method comprises:
displaying a first interface, wherein the first interface comprises a first application interface of a first application that is displayed in full screen;
receiving a first operation corresponding to the first interface, wherein the first operation comprises an operation of performing screen splitting on a screen of the electronic device;
displaying a second interface in response to the first operation, wherein the second interface comprises a first split-screen window and a second split-screen window that are displayed in a split-screen manner; and
determining a display manner of an application interface of a to-be-displayed application in a corresponding split-screen window based on an interface layout direction declared by the to-be-displayed application, and displaying the application interface of the to-be-displayed application in the corresponding split-screen window in the display manner, wherein the to-be-displayed application comprises the first application and a second application, and the display manner comprises displaying in a manner of fully covering a split-screen window and displaying in a manner of not fully covering a split-screen window.

2. The application interface display method according to claim 1, wherein the determining a display manner of an application interface of a to-be-displayed application in a corresponding split-screen window based on an interface layout direction declared by the to-be-displayed application comprises:
if the interface layout direction declared by the to-be-displayed application comprises a current screen direction of the electronic device, the display manner of the application interface of the to-be-displayed application is displaying in the manner of fully covering a split-screen window; or
if the interface layout direction declared by the to-be-displayed application does not comprise the current screen direction of the electronic device, determining the display manner of the application interface of the to-be-displayed application in the corresponding split-screen window based on an interface size adjustment capability declared by the to-be-displayed application.

3. The application interface display method according to claim 2, wherein the determining the display manner of the application interface of the to-be-displayed application in the corresponding split-screen window based on an interface size adjustment capability declared by the to-be-displayed application comprises:
if the interface size adjustment capability declared by the to-be-displayed application is that an interface size is adjustable, the display manner of the application interface of the to-be-displayed application is displaying in the manner of fully covering a split-screen window; or
if the interface size adjustment capability declared by the to-be-displayed application is that an interface size is unadjustable, the display manner of the application interface of the to-be-displayed application is displaying in the manner of not fully covering a split-screen window, or determining the display manner of the application interface of the to-be-displayed application in the corresponding split-screen window based on whether the to-be-displayed application is a preset application.

4. The application interface display method according to claim 3, wherein the determining the display manner of the application interface of the to-be-displayed application in the corresponding split-screen window based on whether the to-be-displayed application is a preset application comprises:
if the to-be-displayed application is the preset application, the display manner of the application interface of the to-be-displayed application is displaying in the manner of not fully covering a split-screen window; or
if the to-be-displayed application is not the preset application, not performing a screen splitting operation corresponding to the to-be-displayed application.

5. The application interface display method according to claim 1, wherein the determining a display manner of an application interface of a to-be-displayed application in a corresponding split-screen window based on an interface layout direction declared by the to-be-displayed application comprises:
if the interface layout direction declared by the to-be-displayed application comprises a current screen direction of the electronic device, the display manner of the application interface of the to-be-displayed application is displaying in the manner of fully covering a split-screen window; or
if the interface layout direction declared by the to-be-displayed application does not comprise the current screen direction of the electronic device, determining the display manner of the application interface of the to-be-displayed application in the corresponding split-screen window based on whether the to-be-displayed application is a preset application.

6. The application interface display method according to claim 5, wherein the determining the display manner of the application interface of the to-be-displayed application in the corresponding split-screen window based on whether the to-be-displayed application is a preset application comprises:
if the to-be-displayed application is the preset application, determining the display manner of the application interface of the to-be-displayed application in the corresponding split-screen window based on an interface size adjustment capability declared by the to-be-displayed application; or
if the to-be-displayed application is not the preset application, not performing a screen splitting operation corresponding to the to-be-displayed application.

7. The application interface display method according to claim 6, wherein the determining the display manner of the application interface of the to-be-displayed application in the corresponding split-screen window based on an interface size adjustment capability declared by the to-be-displayed application comprises:
if the interface size adjustment capability declared by the to-be-displayed application is that an interface size is adjustable, the display manner of the application interface of the to-be-displayed application is displaying in the manner of fully covering a split-screen window; or
if the interface size adjustment capability declared by the to-be-displayed application is that an interface size is unadjustable, the display manner of the application interface of the to-be-displayed application is displaying in the manner of not fully covering a split-screen window.

8. The application interface display method according to claim 1, wherein the method further comprises:
determining the display manner of the application interface of the to-be-displayed application in the corresponding split-screen window based on an interface size adjustment capability declared by the to-be-displayed application.

9. The application interface display method according to claim 8, wherein the determining the display manner of the application interface of the to-be-displayed application in the corresponding split-screen window based on an interface size adjustment capability declared by the to-be-displayed application comprises:
if the interface size adjustment capability declared by the to-be-displayed application is that an interface size is adjustable, the display manner of the application interface of the to-be-displayed application is displaying in the manner of fully covering a split-screen window; or
if the interface size adjustment capability declared by the to-be-displayed application is that an interface size is unadjustable, the display manner of the application interface of the to-be-displayed application is displaying in the manner of not fully covering a split-screen window, or determining the display manner of the application interface of the to-be-displayed application in the corresponding split-screen window based on whether the to-be-displayed application is a preset application, or determining the display manner of the application interface of the to-be-displayed application in the corresponding split-screen window based on the interface layout direction declared by the to-be-displayed application.

10. The application interface display method according to any one of claims 1-9, wherein the method further comprises:
receiving a second operation when the screen of the electronic device is in a split-screen state, wherein the second operation is an operation of rotating a screen direction of the electronic device, or the second operation is an operation of changing a status of a foldable screen of the electronic device, and the status of the foldable screen comprises an unfolded state and a folded state;
displaying a third interface in response to the second operation, wherein the third interface comprises a third split-screen window and a fourth split-screen window that are displayed in a split-screen manner; and
determining the display manner of the application interface of the to-be-displayed application in the corresponding split-screen window based on the interface layout direction declared by the to-be-displayed application, and displaying the application interface of the to-be-displayed application in the corresponding split-screen window in the display manner, wherein the to-be-displayed application comprises the first application and the second application, and the display manner comprises displaying in the manner of fully covering a split-screen window and displaying in the manner of not fully covering a split-screen window.

11. The application interface display method according to any one of claims 1-10, wherein the application interface of the to-be-displayed application is displayed in the split-screen window in the manner of fully covering a split-screen window, a size of the application interface of the to-be-displayed application is equal to a size of the corresponding split-screen window in a first screen direction of the electronic device, and the size of the application interface of the to-be-displayed application is equal to the size of the corresponding split-screen window in a second screen direction of the electronic device, wherein the first screen direction is the current screen direction of the electronic device, and the second screen direction is a direction obtained after the first screen direction is rotated by 90 degrees or 270 degrees.

12. The application interface display method according to any one of claims 1-11, wherein the application interface of the to-be-displayed application is displayed in the split-screen window in the manner of not fully covering a split-screen window, the size of the application interface of the to-be-displayed application is less than the size of the corresponding split-screen window in the first screen direction of the electronic device, and the size of the application interface of the to-be-displayed application is equal to the size of the corresponding split-screen window in the second screen direction of the electronic device, wherein the first screen direction is the current screen direction of the electronic device, and the second screen direction is the direction obtained after the first screen direction is rotated by 90 degrees or 270 degrees.

13. The application interface display method according to any one of claims 1-12, wherein that the application interface of the to-be-displayed application is displayed in the split-screen window in the manner of not fully covering a split-screen window comprises:
displaying the application interface of the to-be-displayed application in the split-screen window in a first size, wherein the first size is a size obtained after an original interface size of the application interface of the to-be-displayed application is adjusted based on a first preset proportion;
displaying the application interface of the to-be-displayed application in the split-screen window in a second size, wherein the second size is a size that corresponds to the first size and whose aspect ratio is a first aspect ratio; or
displaying the application interface of the to-be-displayed application in the split-screen window in a third size, wherein the third size is a size that corresponds to the first size and whose aspect ratio is a second aspect ratio.

14. The application interface display method according to claim 13, wherein the first aspect ratio is 4:3, and the second aspect ratio is 16:9.

15. The application interface display method according to any one of claims 1-14, wherein a first function bar is displayed in a split-screen window that displays an application interface in the manner of fully covering a split-screen window.

16. The application interface display method according to claim 15, wherein the method further comprises:
receiving an operation performed by a user on the first function bar; and
displaying a second function bar in response to the operation performed by the user on the first function bar.

17. The application interface display method according to any one of claims 1-16, wherein the first function bar is not displayed in a split-screen window that displays an application interface in the manner of not fully covering a split-screen window.

18. The application interface display method according to any one of claims 1-17, wherein the second application is an application to-be in split-screen that is selected by the user corresponding to the first operation and that is different from the first application.

19. The application interface display method according to any one of claims 3-7, wherein the preset application is an application in a preset whitelist.

20. The application interface display method according to any one of claims 2-10, wherein the method further comprises determining, in any one of the following cases, that the interface layout direction declared by the to-be-displayed application comprises the current screen direction of the electronic device:
the interface layout direction declared by the to-be-displayed application comprises a first interface layout direction, the current screen direction of the electronic device is a first screen direction, and the first interface layout direction is the same as the first screen direction; and
the interface layout direction declared by the to-be-displayed application comprises a second interface layout direction, the current screen direction of the electronic device is a second screen direction, and the second interface layout direction is the same as the second screen direction.

21. The application interface display method according to claim 20, wherein the first interface layout direction is a portrait layout direction, the second interface layout direction is a landscape layout direction, the first screen direction is a portrait direction, and the second screen direction is a landscape direction.

22. An electronic device, comprising:
a memory, configured to store a computer program, wherein the computer program comprises program instructions; and
a processor, configured to execute the program instructions, to enable the electronic device to perform the application interface display method according to any one of claims 1-21.

23. A computer-readable storage medium, wherein the computer-readable storage medium stores a computer program, the computer program comprises program instructions, and the program instructions are run by an electronic device to enable the electronic device to perform the application interface display method according to any one of claims 1-21.
